# EUROPEAN PATENT SPECIFICATION

(11) **EP 2 570 959 B1**
(45) Date of publication and mention of the grant of the patent: **18.07.2018**
(21) Application number: 12006214.6
(22) Date of filing: 03.09.2012
(51) Int. Cl.: G06F 21/62

(54) **A method of estimating the potential damage of data leakage incident by assigning misuseability weight**
Verfahren zur Schätzung des potenziellen Schadens eines Datenverlustvorfalls durch Zuweisung von Missbrauchsgewicht
Procédé d'estimation des dommages potentiels d'un incident de fuite de données par l'attribution d'un poids de mauvaise utilisation

(30) Priority: 19.09.2011 IL 21523311
(43) Date of publication of application: 20.03.2013
(73) Proprietor: Deutsche Telekom AG, 53113 Bonn (DE)
(72) Inventor: Harel, Amir, Petah Tikva (IL); Shabtai, Asaf, Ness Ziona (IL); Rokach, Lior, Omer (IL); Elovici, Yuval, 79864 Arugot (IL)
(74) Representative: Flaccus, Rolf-Dieter

(56) References cited:
- AMIR HAREL ET AL: "M-score: : estimating the potential damage of data leakage incident by assigning misuseability weight", PROCEEDINGS OF THE 2010 ACM WORKSHOP ON INSIDER THREATS, INSIDER THREATS '10, 1 October 2010 (2010-10-01), page 13, XP055298305, New York, New York, USA DOI: 10.1145/1866886.1866891 ISBN: 978-1-4503-0092-6
- AMIR HAREL ET AL: "M-Score: A Misuseability Weight Measure", IEEE TRANSACTIONS ON DEPENDABLE AND SECURE COMPUTING, IEEE SERVICE CENTER, NEW YORK, NY, US, vol. 9, no. 3, 1 May 2012 (2012-05-01), pages 414-428, XP011433867, ISSN: 1545-5971, DOI: 10.1109/TDSC.2012.17

## Description

### Field of the Invention

The present invention relates to the field of database management in terms of security, integrity and protection.

### Background of the Invention

Publications and other reference materials referred to herein are numerically referenced in the following text and respectively grouped in the appended Bibliography which immediately precedes the claims.

Sensitive information such as customer or patient data and business secrets constitute the main assets of an organization. Such information is essential for the organization's employees, sub-contractors, or partners to perform their tasks. Conversely, limiting access to the information in the interests of preserving secrecy might damage their ability to implement the actions that can best serve the organization. In short, data leakage and data misuse detection mechanisms are essential in identifying malicious insiders.

The task of detecting malicious insiders becomes very challenging as the methods of deception become more and more sophisticated. According to the 2010 Cybersecurity Watch Survey [1] 26% of the cyber-security events, recorded in a 12-month period, were caused by insiders. These insiders were the most damaging with 43% of the respondents reporting that their organization suffered important data loss. Of the attacks, 16% were caused by theft of sensitive data; 12% by loss of intellectual properties; and 15% by exposure of confidential information.

In recent years, several methods have been proposed for mitigating data leakage and data misuse in database systems. These methods can generally be classified as syntax-centric or data-centric. The syntax-centric approach relies on the SQL-expression representation of queries to construct user profiles. For example, a query can be represented by a vector of features extracted from the SQL statement, such as the query type (e.g., SELECT or INSERT), and the tables or attributes requested by the query [2]. Celikel et al. [7] uses this representation when presenting a model for risk management in distributed database systems. The model is used to measure the risk poses by a user in order to prevent her from misusing or abusing her role privileges. In the model, a *Risk Priority Number* (RPN) is calculated for each user, which is the product of the *Occurrence Rating (OR)* that reflects the number of times the same query was issued with respect to the other users in the same role; the *Severity Rating (SR)* that measures the risk by referring to the quality of the data the user might get from the queries she issued; and the *Detection Rating (DR)* indicates how close the behavior of the user is to the behavior of users in other roles (i.e., does she act like a user in a different role). Another syntax-centric method is the framework to enforce access control over data streams [8] that define a set of secure actions (e.g., secure join) that replaces any unsecure action (e.g., join) the user makes. When a user issues an unsecured action, the appropriate secure action is used instead, and by addressing the user permissions, retrieves only data that this user is eligible to see.

The data-centric approach focuses on what the user is trying to access instead of how she expresses the query. With this approach, an action is modeled by extracting features from the obtained result-set. Since the problem is data leakage, it is assumed that analyzing what a user sees (i.e., the result-sets) can provide a more direct indication of a possible data misuse. [3] presents a data-centric approach and considers a query's expression syntax as irrelevant for discerning user intent; only the resulting data matters. For every access to a database, a *statistical vector* (S-Vector) is created, holding various statistical details on the result-set data, such as minimum, maximum and average for numeric attributes, or counts of the different values for text attributes etc. An experiment in this approach shows it significantly outperforms the basic syntax centric approach presented in [2]. Yaseen et al. [9] also proposed a data-centric method that uses dependency graphs based on domain expert knowledge. These graphs are used in order to predict the ability of a user to infer, using the information she already obtained, sensitive information that might harm the organization. In this approach the domain experts defines (1) the knowledge of the organization's data object dependencies (i.e., what additional data can be inferred or determined from the data presented to the user); (2) the data that is restricted or highly sensitive; and (3) those within the organization permitted to access the data. Then, utilizing dependency graphs, the system prevents unauthorized users from gaining information that enables them to infer or calculate restricted data they are not eligible to have.

Also closely related to this line of works are the preventive approaches. The insider prediction tool [10] uses a taxonomy of insider threats to calculate the *Evaluated Potential Threat* (EPT) measure. This measure tries to estimate whether a user's action is correlated with a part of the taxonomy that is labeled as malicious. The EPT is calculated by considering: (1) features describing the user (e.g., her ability to alter physical hardware, her role in the organization); (2) the context of the action (e.g., the program she currently uses); and (3) the action itself (e.g., the specific command). In addition, the tool uses a set of malicious actions that were previously discovered. Bishop and Gates [11] suggested the *group-based access control* (GBAC) mechanism to prevent insiders from misusing their privileges, which is a generalization of RBAC mechanism. This mechanism uses, in addition to the user's basic job description (role), the user characteristics and behavioral attributes such as the time she normally comes to work or the customers with whom she usually interacts.

However, none of the above methods consider the sensitivity level of the data to which the user may be exposed. This factor can greatly impact the outcome when trying to estimate the potential damage to the organization if the data is leaked or misused.

Also relevant to this discussion are measures in the field of *privacy-preserving data publishing* (PPDP). In the Past decade, several such measures were introduced [12], such as *k*-Anonymity [4], *l*-Diversity [5] and (*α*,*k*)-Anonymity [6]. These measures attempt to estimate how easy it is to compromise an individual's privacy in a given publication, where publication refers to a table of data containing *quasi-identifier* attributes, *sensitive* attributes and *other* attributes. The main goal of these measures is to estimate the ability of an attacker to infer who are the individuals (also called victims) behind the quasi-identifier, and thus reveal sensitive attribute values (e.g., disease).

Sweeney [4] proposed the *k*-anonymity measure that indicates how hard it is to fully identify who the owner is of each record in a published table *T,* given a publicly available database (e.g., Yellow Pages). The measure determines that *T* satisfies *k*-anonymity if and only if each value of the quasi-identifier in *T* appears at least *k* times.

A known disadvantage of *k*-anonymity is that it does not consider the diversity of the sensitive attribute value. In an effort to deal with this issue, the *l*-Diversity measure [5] employs a different approach that considers the diversity of the sensitive values denoted by *T.* (*α*,*k*)-Anonymity [6] is a hybrid approach that adds to *k*-anonymity a requirement that for every different value of quasi-identifier, every different value of the sensitive attributes appears with a frequency of no less than *α*∈[0,1].

PPDP algorithms are useful when there is a need for exporting data (e.g., for research or analysis) while retaining the privacy of individuals in the published data set. PPDP algorithms can also be used in a limited way for estimating the level of harm one might cause with the given data, because the harder it is to identify who is the entity in a record, the lower the potential risk of a perpetrator maliciously exploiting that information. This approach, however, is not effective in other scenarios that assume a user has full access to the data.

In a previous presentation [24], the inventors of the present invention disclose a method for predicting the ability of a user to exploit the data obtained in answer to queries sent to an organization's data bases for malicious purposes. The method involves determining a measure called M-score, which assigns a misuseability weight to each table of data returned to the user in response to their query.

The method taught in this paper applies to only one data table at a time. Since it is known that a malicious insider can gain much more valuable information from several queries than they can from one query, it would be very advantageous to have a method that would determine a single M-score for all queries made by the user in a given time frame. In this way it would be much simpler to understand whether the queries are legitimate or have been submitted for malicious or unauthorized reasons.

It is therefore a purpose of the present invention to provide a system that mitigates leakage or misuse incidents of data stored in databases by an insider having legitimate privileges to access the data.

It is yet another purpose of the present invention to provide a system that detects data leakage and data misuse comprising the concept of *Misuseability Weight* which assigns a sensitivity score to datasets.

It is yet another purpose of the present invention to provide a system that estimates the level of harm that might be inflicted when the data is leaked.

It is yet another purpose of the present invention to provide a system that can be used for applying anomaly detection by learning the normal behavior of an insider in terms of the sensitivity level of data she is usually exposed to.

It is yet another purpose of the present invention to provide a system alert when a deviation from the normal state is detected.

It is yet another purpose of the present invention to provide a system that can improve the process of handling leakage incidents identified by other misuse detection systems by enabling the security officer to focus on incidents involving more sensitive data.

It is yet another purpose of the present invention to provide a system that can implement a dynamic misuseability-based access control, designed to regulate user access to sensitive data stored in relational databases.

Further purposes and advantages of this invention will appear as the description proceeds.

### Summary of the Invention

In a first aspect the invention is a computerized method for determining *M-*score for use in detecting data leakage and data misuse in a computer system belonging to an organization. The computer system comprises:
a) at least one database that contains the organization's data;
b) at least one application server configured to receive queries from users, to communicate with and receive data from at least one of the databases, and to construct from the data a publication, which is a table comprising data records;
c) at least one user device configured to be used by a user to send queries to the at least one application server and to receive publications returned by the application server;
d) at least one *M*-score server configured to determine a *M*-score for all publications returned by the application servers to all queries submitted by the user during a time frame F; and
e) communication links between the components of the system.

The method, which is executed by the at least one *M*-score server, is characterized in that, comprises carrying out a recursive *Construct Publication Ensemble* procedure comprising the following steps:
a) if no previous publications exist, return new publication *Tₙ*;
b) if previous publications exist, create for each new publication an ensemble set *X* of all the previous publications that are within the time frame *F*;
c) return a resulting ensemble set *E*; and
d) determine the *M*-score for the publication *Tₙ* from step a or for the ensemble of publications *E* from step c according to the following four step procedure:
   i)determining a raw record score for each record in the publication or ensemble;
   ii) determining a record distinguishing factor for each record in the publication or ensemble;
   iii) determining a final record score for the publication or ensemble using the distinguishing factor and the raw record score; and
   iv) combining the final record score with a quantity factor in order to determine the *M*-score for the publication or ensemble.

In embodiments of the method step (ii) comprises determining a rank that indicates the efforts a user has to invest in order to find the exact identifier looked for. The rank that is determined can reflect the minimal value of all quasi-identifier counts in case of multiple quasi-identifiers in a dataset.

In embodiments of the method determining an *M*-score comprises taking into account prior knowledge, wherein the prior knowledge includes previous dataset knowledge already exposed to the user and/or knowledge on the definition of the dataset. The prior knowledge can be the set of sensitive attributes that are included in request *R* constraints and the set of attributes in the published dataset that is retrieved following request *R.*

In embodiments of the method the *M*-score is used for improving performance of existing detection procedures.

In a second aspect the invention is a method of using the *M*-score determined by use of the method of the first aspect to regulate user access to sensitive datasets. The method of the second aspect, which is executed by at least one of the *M*-Score servers, comprises the steps of:
a) assigning a misuseability clearance to each user;
b) carrying out a recursive *Construct Publication Ensemble* procedure for all queries the user submits to the system server by means of his/her user device during a given time frame;
c) determining the *M*-score for an ensemble set returned by the *Construct Publication Ensemble* procedure ;
d) comparing the determined *M*-score with the misuseability clearance; and
e) preventing presentation of data if the user has a low misuseability clearance compared to the derived *M*-score.

In a third aspect the invention is a method of using the *M*-score determined by use of the method of the first aspect to regulate user access to sensitive datasets. The method of the third aspect, which is executed by at least one of the *M*-Score servers, comprises the steps of:
a) assigning a misuseability clearance to each user;
b) carrying out a recursive *Construct Publication Ensemble* procedure for all queries the user submits to the system server by means of his/her user device during a given time frame;
c) determining the *M*-score for an ensemble set returned by the *Construct Publication Ensemble* procedure;
d) comparing the determined *M*-score with the misuseability clearance; and
e) presenting a subset of the result-set if the user has a low misuseability clearance compared to the derived *M*-score.

In step (a) of the method of either the second or the third aspect of the invention, misuseability clearance can be assigned according to normal behavior during a learning phase.

The method of either the second or the third aspect of the invention can comprise an additional step of activating an alert system if the user has a low misuseability clearance compared to the derived *M*-score.

In embodiments of the method of the first aspect the recursive *Construct Publication Ensemble* procedure comprises the following steps:

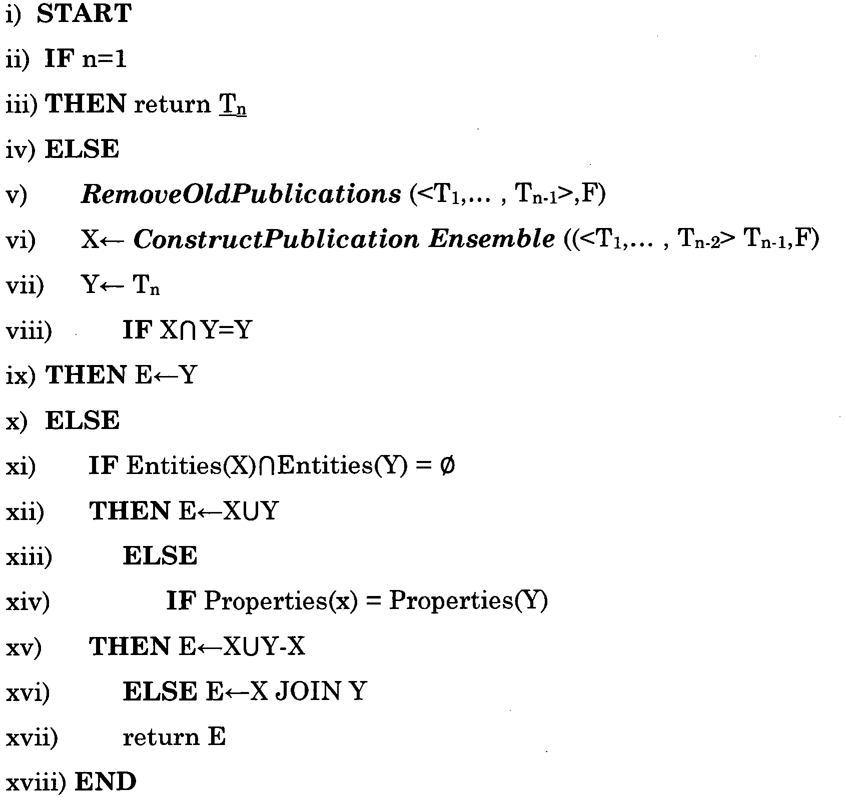

Wherein, X and Y are two sequential publications; *<T₁,* ... , *T*_{*n*-*1*}> are the previous publications; *Tₙ* is the current (new) publication; *F* is the time frame in which a previous publication should still be considered; Entities (X) are all the values of the identifiers attributes in publication X; Properties (X) are all the sensitive attributes of publication (X); Entities (Y) are all the values of the identifiers attributes in publication Y; and Properties (Y) are all the sensitive attributes of publication (Y).

### Brief Description of the Drawings

- Fig. 1.1 and Fig. 1.2 schematically illustrate two possible configurations of a simplified model of a computer system (network) of an organization in which the method of the invention can be advantageously employed;
- Fig. 2 is an example of quasi-identifier and sensitive attributes;
- Fig. 3 is an example of sensitivity score function;
- Fig. 4 illustrates nine cases resulting from two fully identifiable publications - X and Y;
- Fig. 5 is the Construct Publication Ensemble procedure;
- Fig. 6 is a scored records example;
- Fig. 7 is a linear regression model;
- Fig. 8 is a R rPart output of CART-like regression tree;
- Fig. 9 is a pairwise comparison of attributes and values;
- Fig. 10 is an example of AHP-tree with 3 levels;
- Fig. 11 is an example of table ranking; and
- Fig. 12 A sensitivity score function space and the model subspace.

### Detailed Description of Embodiments of the Invention

Data stored in an organization's computers is extremely important and embodies the core of the organization's power. An organization undoubtedly wants to preserve and retain this power. On the other hand, this data is necessary for daily work processes. Users within the organization's perimeter (e.g., employees, sub-contractors, or partners) perform various actions on this data (e.g., query, report, and search) and may be exposed to sensitive information embodied within the data they access.

In an effort to determine the extent of damage to an organization that a user can cause using the information she has obtained, the inventors have previously introduced a new concept of *Misuseability Weight.* By assigning a score that represents the sensitivity level of the data that a user is exposed to, the misuseability weight can determine the extent of damage to the organization if the data is misused. Using this information, the organization can then take appropriate steps to prevent this damage or to minimize its impact.

Assigning a misuseability weight to a given dataset is strongly related to the way the data is presented (e.g., tabular data, structured or free text) and is domain specific. Therefore, one measure of misuseability weight cannot fit all types of data in every domain. Misuseability can be defined by four general dimensions. These dimensions, which may have different levels of importance for various domains, serve as guidelines when defining a misuseability weight measure. While the first two dimensions are related to entities (e.g., customers, patients, or projects) that appear in the data, the last two dimensions are related to the information (or properties) that are exposed about these entities. The four dimensions are:
**Number of entities** - This is the data size with respect to the different entities that appear in the data. Having data about more entities obviously increases the potential damage as a result of a misuse of this data.
**Anonymity level** - While the number of different entities in the data can increase the misuseability weight, the anonymity level of the data can decrease it. The anonymity level is regarded as the effort that is required in order to fully identify a specific entity in the data.
**Number of properties** - Data can include a variety of details, or properties, on each entity (e.g., employee salary or patient disease). Since each additional property can increase the potential damage as a result of a misuse the number of different properties (i.e., amount of information on each entity) should affect the misuseability weight.
**Values of properties** - The property value of an entity can greatly affect the misuseability level of the data. For example, a patient record with disease property equals to HIV should probably be more sensitive than a record concerning patient with a simple flu.

With these dimensions, PPDP measures can be considered as misuseability weight measures. However, PPDP measures are only effective in a limited way through their capability of measuring the anonymity level dimension of the data. PPDP measures lack any reference to the other important dimensions that are necessary for weighting misuseability. For example, consider a table that shows employee names and salaries. Even if we double all the salaries that appear in the table, there may not be any change in either of these measures' scores, and therefore no reference to the values of properties dimension. As a result of this lack, as well as others, PPDP measures are not sufficiently expressive to serve as a misuseability weight measure and a new measure is needed.

Therefore, the inventors defined a method of determining a misuseability weight that is designated herein as *M*-Score. The *M*-score considers and measures different aspects related to the misuseability of the data in order to indicate the true level of damage that can result if an organization's data falls into wrong hands. *M*-Score is tailored for tabular datasets (e.g., result sets of relational database queries), and focuses on assigning a score that represents the misuseability weight for each table exposed to the user. The *M*-score can be used as an access control mechanism, using it to improve existing detection methods or as the base of an anomaly detection method.

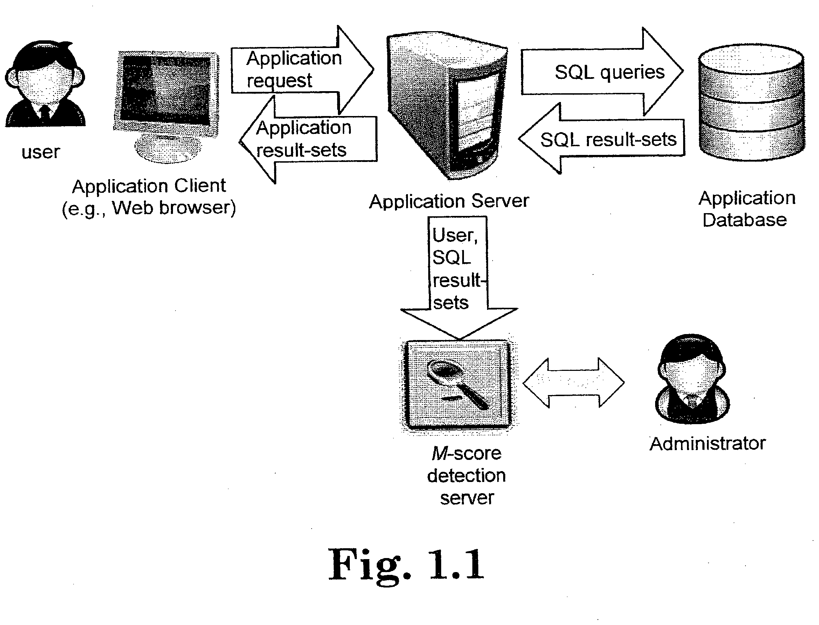

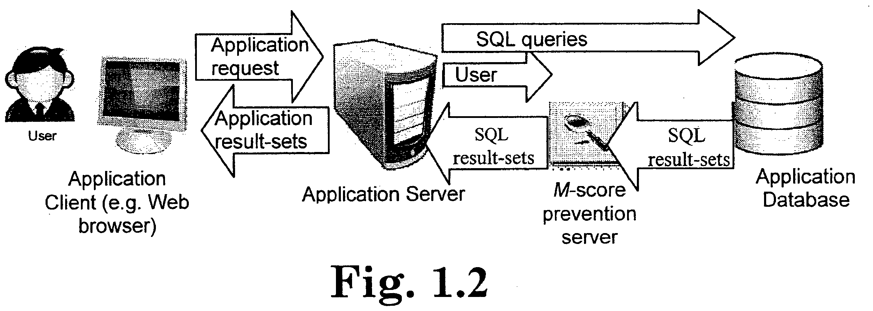

Fig. 1.1 and Fig. 1.2 schematically illustrate two possible configurations of a simplified model of a computer system (network) of an organization in which the method of the invention can be advantageously employed. The system comprises at least one server which is connected to one or more databases as well as to the user terminal of at least one user, and an additional server which implements the *M*-score method. The *M*-score server can be used as a detection server (Fig. 1.1) which is located offline, receives information identifying the user and SQL result sets from the application server, ranks a user's actions according to the returned result-set and sends the results to an administrator for further action. In another configuration (Fig. 1.2) the *M*-score server is used as a prevention server, which intercepts traffic between the application database and the application server. In this case it serves as a dynamic regulator, which controls user access to sensitive data stored in the database. In both cases, the server is adapted to measure the *M*-score which indicates the true level of damage that can result if an organization's data misuseability-based access control server which falls into wrong hands. The computer system can contain single, multiple or distributed databases as well as alone or more user terminal of the organization.

### Basic definitions

A table *T*(*A₁,* ...,*Aₙ*) is a set of *r* records. Each record is a tuple of *n* values. The value *i* of a record, is a value from a closed set of values defined by *Aᵢ*, the *i*'s *Attribute* of *T.* Therefore, A*ᵢ* is defined either as the name of the column *i* of *T,* or as a domain of values.

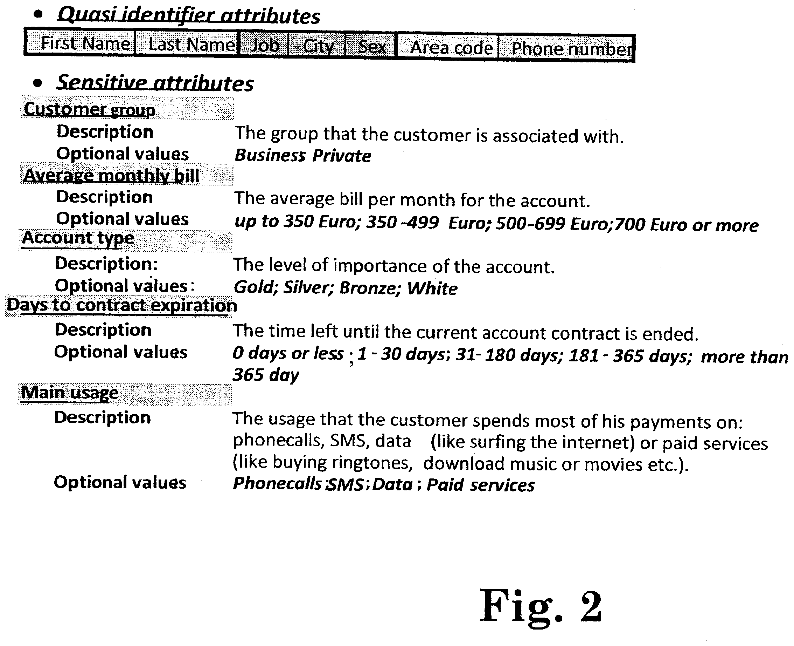

To exemplify the computation of the *M*-score, the database structure of a cellular company as represented in Fig. 2 is used. The database consists of seven quasi-identifier attributes-{*First Name, Last Name, Job, City, Sex, Area Code, Phone Number*} and five sensitive attributes - {*Customer Group, Average Monthly Bill, Account Type, Days to Contract Expiration, Main Usage*}*.*

Quasi-identifier attributes *Qᵢ* = *{qᵢ₁,...,qᵢₖ}*⊆*{Aᵢ,...,A*ₙ*}* are attributes that can be linked, possibly using an external data source, to reveal a specific entity that the specific information is about. In addition, any subset of a quasi-identifiers (consisting of one or more attributes of *Qᵢ*) is a quasi-identifier itself.

In Fig. 2, the quasi-identifier attributes are three different sets of attributes *- Q₁* = {*First Name, Last Name}, Q₂* = *{Job, City, Sex}* and *Q₃* = *{Area Code, Phone Number}.*

Sensitive attributes *Sⱼ*={*sⱼ₁*,...,*sⱼₖ*} ⊆ {*Aᵢ*,...,*Aₙ*} are attributes that can be used to evaluate the importance of a specific record. The sensitive attributes are mutually excluded from the quasi-identifier attributes (i.e., ∀*i,jSⱼ*∩*Qᵢ*=∅).

In Fig. 2, there are five different sensitive attributes- from *S₁* = {*Customer Group}* to *S₅* = {*Main Usage*}.

The sensitivity score function *f*:*Cₜ*×*Sⱼ*→[0,1] assigns a sensitivity score to each possible value *x* of *Sⱼ*, according to the context *Cₜ* in which the table was exposed.

For each record *r*, the value *xᵣ* of S*j* is denoted as *Sⱼ*[*xᵣ*]*.*

Previous studies show that privacy (and therefore misuseability) of data, are fundamentally context-driven (e.g., [14]). Barth et al. [15] reject the claim that the definition of private versus public does not include a given context. In light of these works, context is also a parameter in the sensitivity score function of the method. The context in which the table was exposed, denoted by *Cₜ,* can be, for example, the time when the action was performed (e.g., daytime, working hours, weekend); the location in which it happened (e.g., the hospital in which the patient is hospitalized or a clinic in the other part of the country); or the user's role.

The sensitivity score function is defined by the data owner (e.g., the organization) and it reflects the data owner's perception of the data's importance in different contexts. When defining this function, the data owner might take into consideration factors such as privacy and legislation, and assign a higher score to information that eventually can harm others (for example, customer data that can be used for identity theft and might result in compensatory costs). In addition, the data owner should define the exact context attributes.

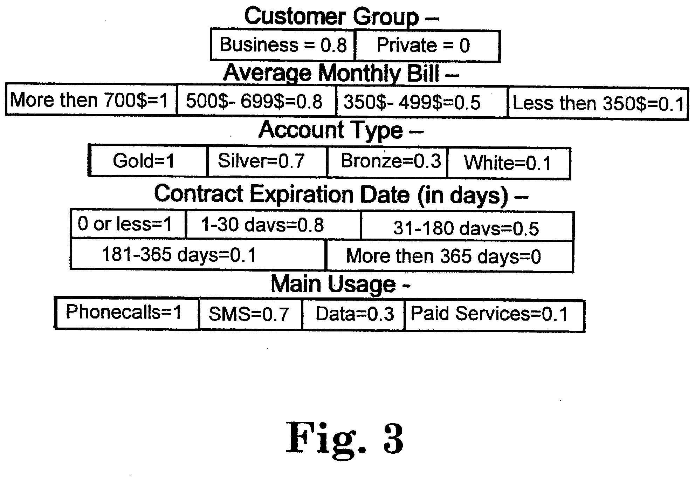

Fig. 3 is an example of full definition of sensitivity score function *f.* In this example it is assumed that there is only one context. As shown, *f* can be defined for both discrete attributes (e.g., Account type) and continuous ones (e.g., Average monthly bill).

Using these definitions, the *M*-score measure can be defined. This measure incorporates three main factors-
1. *Quality of the information* - the importance of the information.
2. *Quantity of the information* - how much information is exposed.
3. *The distinguishing factor* - given the quasi-identifiers, the amount of efforts required in order to discover the specific entities to which the table refers.

The example presented in Table 1 demonstrates the process of determining the *M*-score. Table 1A represents the source table (i.e., the "database") while Table 1B is a published table that was selected from the source table and for which *M*-score is determined.

**Table 1. Source and published tables**

| **(A) The source table** | | | | |
|---|---|---|---|---|
| **Job** | **City** | **Sex** | **Account Type** | **Average Monthly Bill** |
| Lawyer | NY | Female | Gold | $350 |
| Gardener | LA | Male | White | $160 |
| Gardener | LA | Female | Silver | $200 |
| Lawyer | NY | Female | Bronze | $600 |
| Teacher | DC | Female | Silver | $300 |
| Gardener | LA | Male | Bronze | $200 |
| Teacher | DC | Female | Gold | $875 |
| Programmer | DC | Male | White | $20 |
| Teacher | DC | Female | White | $160 |

| **(B) The published table** | | | | |
|---|---|---|---|---|
| **Job** | **City** | **Sex** | **Account Type** | **Average Monthly Bill** |
| Lawyer | NY | Female | Gold | $350 |
| Lawyer | NY | Female | Bronze | $600 |
| Teacher | DC | Female | Silver | $300 |
| Gardener | LA | Male | Bronze | $200 |
| Programmer | DC | Male | White | $20 |
| Teacher | DC | Female | White | $160 |

The system is adapted to measure the *M*-Score using a method comprising the steps of:

### a. Determining Raw Record Score

The determination of the raw record score of record *i* (or *RRSᵢ*), is based on the sensitive attributes of the table, their value in this record, and the table context. This score determines the quality factor of the final *M*-score, using the sensitivity score function *f.*
Raw Record Score (RRSᵢ) is defined as $RR {S}_{i} = min \left(1, {\sum }_{{s}_{j} ∈ τ} f \left({C}_{t} , {S}_{j} \left[{x}_{i}\right]\right)\right)$ For a record *i, RRSᵢ* will be the sum of all the sensitive values score in that record, with a maximum of 1.

For example, in Table 1B, *RRS₁* = *min*(1,1+0.5) = 1 and *RRS₃* = *min*(1,0.7+0.1) = 0.8

### b. Determining Record Distinguishing Factor

The record distinguishing factor (*Dᵢ*) is a *k*-anonymity-like measure, with a different reference table from which to determine *k*. While *k*-anonymity calculates, for each quasi-identifier, how many identical values are in the published table, the distinguishing factor's reference is "Yellow Pages". This means that an unknown data source, denoted by *R*₀, contains the same quasi-identifier attributes that exist in the organization's source table, denoted by *R*₁ (for example, Table 1A). In addition, the quasi-identifier values of *R*₁ are a sub-set of the quasi-identifier values in *R*₀, or more formally- Π_{quasi-identifier}*R*₁⊆Π_{quasi-identifier}*R*₀. The method assumes that the user might hold *R*₀. However, since *R*₀ is unknown, and since Π_{quasi-identifier}*R*₁⊆ Π_{quasi-identifier}*R*₀ ⇒ *D*_{*R*1}(*x*)≤ *D*_{*R*0}(*x*), *R*₁ is used as an approximation for determining the distinguishing factor.

*Dᵢ* is referred to as a rank that indicates the effort a user will have to invest in order to find the exact customer she is looking for. In the example presented in Table 1B the distinguishing factor of the first record is equal to two (i.e., *D₁* = 2) since the tuple {*Lawyer, NY, Female*} appears twice in Table 1A. Similarly, *D₃* = 3, ({*Teacher*, *DC, Female*} appears three times in Table 1A); *D₄* = 2; and *D₅* = 1*.*

In case of multiple quasi-identifiers in a table, the value of *Dᵢ* will reflect the minimal value of all the quasi-identifier counts. For example, if a table has two quasi-identifiers sets, *Q₁* and *Q₂*, and in record *i* the distinguishing factor determined according to *Q₁* is higher than the one determined according to *Q₂*, then *Dᵢ* of that record will reflect the quasi-identifier counts of *Q₂*.

If there are no quasi-identifier attributes in the published table, *Dᵢ* is defined for each record *i*, as equal to the published table size.

### c. Determining the Final Record Score

The Final Record Score (*RS*) uses the records' *RSSᵢ* and *Dᵢ*, in order to assign a final score to all records in the table.

Given a table with r records, *RS* is determined as follows: $RS = {max}_{0 \leq i \leq r} \left(R {S}_{i}\right) = {max}_{0 \leq i \leq r} \left(\frac{RR {S}_{i}}{{D}_{i}}\right)$

For each record *i*, the weighted sensitivity score *RSᵢ* is the record's sensitivity score (*RRSᵢ*) divided by its distinguishing factor (*Dᵢ*)*.* This ensures that as the record's distinguishing factor increases (i.e., it is harder to identify the record in the reference table) the weighted sensitivity score decreases. The *RS* of the table is the maximal weighted sensitivity score.

For example, the *RS* score of Table 1B is calculated as follows: $RS \left(1 b\right) = max \left(\frac{1}{2} , \frac{1}{2} , \frac{0.8}{3} , \frac{0.4}{2} , \frac{0.2}{1} , \frac{0.2}{3}\right) = \frac{1}{2}$

### d. Determining the M-score

Finally, the *M*-score measure of a table combines the sensitivity level of the records defined by *RS* and the quantity factor (the number of records in the published table, denoted by *r*). In the final step of determining the *M*-score, the method uses a settable parameter *x* (*x* ≥ 1) defined according to the specific domain characteristics. This parameter sets the importance of the quantity factor within the table's final *M*-score. The higher the value to which *x* is set, the lower the effect of the quantity factor on the final *M-*score.

Given a table with *r* records, the table's *M*-score is calculated as follows: $MScore = {r}^{\frac{1}{x}} \times RS = {r}^{\frac{1}{x}} \times {max}_{0 \leq i \leq r} \left(\frac{RR {S}_{i}}{{D}_{i}}\right)$ where *r* is the number of records in the table, *x* is a given parameter and *RS* is the final Record Score presented above.

For example, for *x* = 2 ⇒¹/*ₓ* = ½, the *M*-score of Table 1B is, *M-*score(1B) = √6 × 0.5 = 1.224.

According to one embodiment of the method the published table has one or more quasi-identifier attributes and one or more sensitive attributes.

According to another embodiment there are no quasi-identifiers, the data is unidentifiable in the sense of discovering sensitive information regarding a specific entity. Thus, the given information can only leak statistical information. Since the distinguishing factor of a table without quasi-identifiers is defined to be the size of the published table, the *M*-score reflects the sensitivity of this statistical information as a group of indistinguishable details, i.e. statistical metrics. If there are no sensitive attributes, each quasi-identifier is assigned a pre-defined default sensitivity value.

The *M*-Score as defined by the inventors has 2 interesting properties: monotonic increasing and *M*-Score of union of tables.

### a. monotonic increasing

When determining the *M*-score of two tables, where one is a sub-set of the other, the *M*-score of the super-set table is equal to or greater than the *M-*score of the sub-set tables.

### Statement 1: Let Ti, T₂ tables.

*If T₁*⊆*T₂*, *then M-score*(*T₁*) ≤ *M-score*(*T₂*)*.*

### Proof:

Let, *rᵢ* be the number of records in *Tᵢ* (i.e., *rᵢ*=|*Tᵢ*|); max*ᵢ* the final record score of *Tᵢ* (i.e., max*ᵢ*=*RS*(*Tᵢ*)); and *mᵢ* the first record in *Tᵢ* where max*ᵢ* =*RS_{mᵢ}.*

Since *T₁*⊆*T₂*, we know that *r₁*≤*r₂*.

If *m₂*∈*T₁*,
then max₂=max₁ and therefore, $M - score \left({T}_{2}\right) = {r}_{2} {}^{1 / x} \times {max}_{1} \geq {r}_{1} {}^{1 / x} \times {max}_{1} = M - score \left({T}_{1}\right)$ Else, if *m₂*∉*T₁*,
then max₂ ≥ max₁(Otherwise, max₂ < max₁ which is a contradiction to the definition of max₂ - the maximum value of all records in *T₂*).

Therefore, $M - score \left({T}_{2}\right) = {r}_{2} {}^{1 / x} \times {max}_{2} \geq {r}_{1} {}^{1 / x} \times {max}_{1} = M - score \left({T}_{1}\right)$

### b. M-score of union of tables

When determining *M*-score with *x*=1, then the *M*-score of the union table (*Bag Algebra* union) is equal to or greater than the sum of *M*-scores of two tables with the same attributes.

### Statement 2: Let T₁(A₁,...,Aₙ), T₂(B₁,...,Bₙ) tables, where ∀ᵢ, Aᵢ=Bᵢ.

*If x*=*1*, *then M-score (T₁∪T₂)* ≥ *M-score(T₁)* + *M-score(T₂).*

### Proof:

Let, *rᵢ* be the number of records in *Tᵢ* (i.e., *rᵢ*=|*Tᵢ*|);
max*ᵢ* the final record score of *Ti* (i.e., max*ᵢ*=*RS*(T*ᵢ*));
and max' the maximal between max₁ and max₂.
$\begin{matrix}Then , M - score \left({T}_{1}\right) + M - score \left({T}_{2}\right) = {r}_{1} \times {max}_{1} + {r}_{2} \times {max}_{2} \leq {r}_{1} \times max ' + {r}_{2} \times \\ max ' = \left({r}_{1} + {r}_{2}\right) \times max ' = M - score \left({T}_{1} ∪ {T}_{2}\right)\end{matrix}$

This property suggests that in order to avoid detection while obtaining a large amount of sensitive data, the user has to work harder and must obtain the data piece by piece, a small portion at a time. Otherwise, *M*-score would rank the user's actions with a high misuseability weight.

According to the present invention the *M*-Score measurement is extended and also refers to user's "prior knowledge". Prior knowledge can be: (1) previous publications (i.e., previous data tables the user was already exposed to); and (2) knowledge on the definition of the publication (e.g., if the SQL query statement is given and the user can see the WHERE clause).

### a. previous publications

A malicious insider can gain valuable information from accumulated publications by executing a series of requests. The result of each request possibly reveals information about new entities, or enriches the details on entities already known to the user. In some cases the user can uniquely identify each entity (e.g., customer) in all the publications, i.e., the distinguishing factor is equal to 1 (D*ᵢ*=1), the *M*-score can be extended to refer to this knowledge.

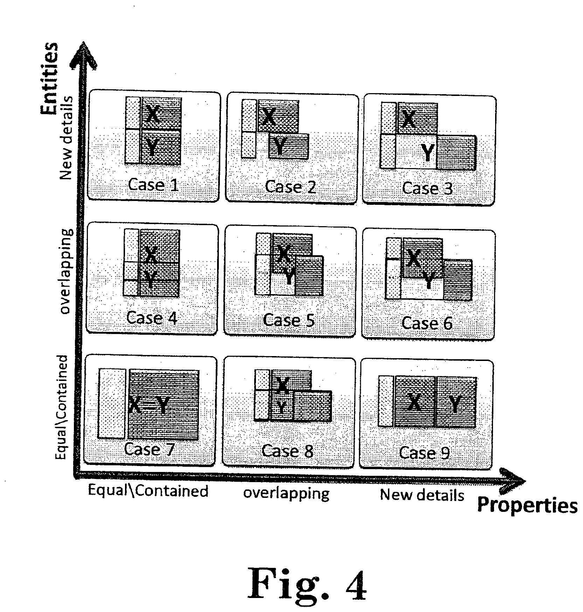

Fig. 4 depicts nine different cases resulting from two fully identifiable sequential publications. Each case is determined by the relation (equal, overlapping or distinct) between the two publications with respect to the publications' sensitive attributes (marked in grey) and the exposed entities which are the distinct identifier values (marked in white). For example, in case 1 on Fig. 4, the publications share the same schema (i.e., include the same attributes in all tuples), but have no common entities; case 6 presents two publications that share some of the entities, but each publication holds different attributes on them.

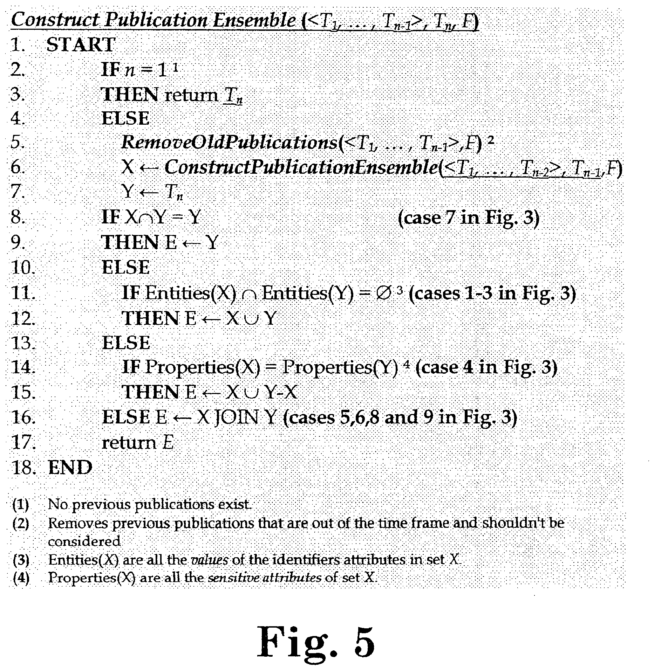

Based on these nine possible cases, the present invention provides the *Construct Publication Ensemble* procedure (Fig. 5) that constructs an ensemble set *E* on which the *M*-score is determined, where *<T₁,* ... , *T*_{*n*-*1*}> are the previous publications; *Tₙ* is the current (new) publication; and *F* is the time frame in which previous publication should still be considered.

The *Construct Publication Ensemble* procedure is recursive. For each new publication, the procedure first creates an ensemble set *E* of all the previous publications that are within the time frame *F* (lines 5 to 7). Then, the procedure checks which case in Fig. 4 fits the current publications and acts accordingly (lines 8 to 16). Finally, on line 17 the resulting ensemble set is returned.

### b. publication definition

A user may have additional knowledge on the data she receives emanating from knowing the structure of the request that created this data, such as the request's constraints. In such cases, the basic *M*-score does not consider such knowledge. For example, a user might submit the following request: "select 'Name' of customers with 'Account type'='gold'" In this case, the user knows that all customers are 'gold' customers. However, since the result-set of this request will only include the names, the *M*-score cannot correctly compute its misuseability weight. In order to extend the *M*-score to consider this type of prior knowledge, RES(R) and COND(*R*) operators are defined:
RES(*R*) = {*A₁,*...*,Aₙ*} is the set of attributes in the published table that is retrieved following the request *R.*

COND(*R*) = {*S₁*, ...,*Sₘ*} is the set of sensitive attributes that are included in request *R* constraints, such that RES(*R*)∩COND(*R*)=∅. The calculated sensitivity value of attribute *Sⱼ* is denoted by COND(*R*)ⱼ.

For example, in the request *R*="*select 'Job' and 'Average monthly bill' of customers with 'Account Type' = BRONZE, 'Average monthly bill' > 100 AND 'City'* = *NY*", RES(*R*) = {'Job', 'Average Monthly Bill'}. The constraints' attributes of *R* is the set {'Account type', 'Average monthly bill', City}. However, since 'Average monthly bill'∈RES(*R*) and 'City' is not a sensitive attribute, COND(R) = {Account Type}.

COND(*R*)ⱼ can be calculated according to a different strategies depending on the attribute type (i.e., discrete or continuous). Some of the possible strategies are presented using the following example:
***R*ₑₓₚ₁** = select the first name and last name of all customers with Account type = Bronze or Silver
***R*ₑₓₚ₂** = select the first name and last name of all customers with Average monthly bill between 100 to 300

**Sensitivity maxima:** In case of discrete attributes, the COND(*R*ₑₓₚ₁)ⱼ can be set to be the maximal value returning from the sensitivity score function, from all possible values specified in *R*ₑₓₚ condition. In the example above, the possible values of 'Account type' are Bronze or Silver. If the sensitivity score function presented in Fig. 3 is used, then *f*(Account type [Silver]) = 0.7 >*f*(Account type[Bronze]) = 0.3. So, COND(*R*ₑₓₚ₁)ⱼ should be set to be 0.7.

**Weighted value:** According to this strategy, the value COND(*R*ₑₓₚ₁)ⱼ of a discrete attribute is set according to the relative frequency in the source table of each possible value in *R*ₑₓₚ constraint, with respect to the other possible values. For example, if in the source table the Account Type of α records are Bronze and of β records Silver, then $\begin{matrix}COND {\left({R}_{exp 1}\right)}_{j} = f \left(Account type \left[Bronze\right]\right) \times \left(\frac{α}{α + β}\right) + f \left(Account type \left[Silver\right]\right) \times \\ \left(\frac{β}{α + β}\right) = 0.3 \times \left(\frac{α}{α + β}\right) + 0.7 \times \left(\frac{β}{α + β}\right) .\end{matrix}$

**Strategies for continuous attributes:** To set the value of COND(*R*ₑₓₚ₂)ⱼ, the strategy might be to take either the average value in the condition value range (e.g., 200 in *R*ₑₓₚ₂ case), or the maximal sensitivity score function given from the lower or the higher bound of the given range.

In the basic definition of the *M*-score, *M*-score*(R)* is given by ranking the values of RES(*R*) in the result table. In order to extend the measure to also consider prior knowledge, a change in the definition of the *Raw Record Score* is introduced so it will also consider the values of COND(R) attributes. Therefore, a new definition of *RRSᵢ* is presented: $RR {S}_{i} = min \left(1, {\sum }_{{s}_{j} ∈ RES \left(R\right)} f \left({c}_{t} , {s}_{j} \left[{x}_{i}\right]\right) + {\sum }_{{s}_{j} ∈ COND \left(R\right)} COND {\left(R\right)}_{j}\right)$

For a record *i*, the extended *RRSᵢ* will be the sum of all sensitive values scores in that record plus the sum of all the values given by COND(*R*)ⱼ with the maximum score of 1.

The method of the present invention which measures the *M*-score can be used in many applications which will be obvious to one trained in the art. Some applications of different embodiments will now be described. The *M-*score can be used as an access control mechanism, using it to improve existing detection methods or as the base of an anomaly detection method.

Data access control mechanisms are generally categorized as *discretionary access control* (DAC), *role-based access control* (RBAC) or *mandatory access control* (MAC) [16].

According to an embodiment of the present invention the *M*-score is used as the basis for a new MAC mechanism for relational databases. The basic MAC mechanism regulates user access to data according to predefined classifications of both the user (the *subject*) and the data (the *object*). The classification is based on partially ordered access classes (e.g., top secret, secret, confidential, unclassified). Both the objects and the subjects are labeled with one of these classes, and the permission is granted by comparing the subject access class to that of the object in question. MAC implementations for relational databases partition the database records to sub-sets, with each sub-set holding all records with the same access class. According to the proposed method, the *M*-score is used for dynamically assigning an "access class" to a given set of records (i.e., a table).

The access control mechanism of this embodiment of the invention, called *Dynamic Misuseability-Based Access Control (DMBAC)* herein, is used to regulate user access to sensitive data stored in relational databases; it is an extension of the basic MAC mechanism.

DMBAC is enforced as follows. First, each user is assigned with a "misuseability clearance", i.e., the maximal *M*-score that this subject is eligible to access. Then, for each query that a user submits, the *M*-score of the returned result-set is determined. The derived *M*-score, which represents the *dynamic access class* of that result-set, is compared with the misuseability clearance of the subject in order to decide whether she is entitled to access the data she is requesting. Note that similar to the basic MAC, the DMBAC can be enforced in addition to existing access control layers such as role-based or discretionary access control.

The DMBAC approach presents several advantages over the basic MAC mechanism. First, as opposed to the finite number of access classes in MAC, in DMBAC there can be an infinite number of dynamic access classes, allowing more flexibility and fine-grained access control enforcement. Second, while manual labeling of tuples is required in MAC, in DMBAC, once the sensitivity score function is acquired, every result-set can be labeled automatically. Third, the dynamic approach enables the access control mechanism to derive a context-based access label, for example, the amount of tuples that were exposed or the data that the subject already possesses (using the extensions presented above). Last, while in the basic MAC subjects are only permitted to write to objects with access class higher or equal to their own (to prevent exposure of data to unauthorized subjects), in DMBAC the access class is assigned dynamically and therefore subjects are not limited in their writing.

The DMBAC mechanism operates in the following two modes: *binary* and *subset disclosure.* In the *binary mode,* if the misuseability clearance of the subject is lower than the *M*-score of the result-set, no data will be presented at all. In the *subset disclosure mode,* a subset of the result-set might be presented to the user. The subset of records can be selected, for example, by iteratively removing the most sensitive record from the result-set and exploiting the fact that the *M*-score is greatly affected by its score. Doing so will eventually create a subset whose *M*-score is lower than or equal to the subject's misuseability clearance.

A different usage scenario arises in implementing *M*-score-based anomaly detection. During the learning phase, the normal behavior of each user or role is extracted. The normal behavior represents the sensitivity level of the data to which users are exposed, during their regular activity within different contexts (e.g., time of day, location). During the detection phase, the *M*-score of each action is computed and validated against the behavioral model that was derived in the learning phase. A significant deviation from the normal behavior (i.e., access to data with a sensitivity level significantly higher than the data that the user normally accesses) will trigger an alert.

Lastly, the *M*-score measure can be used for improving the detection performance of existing detection mechanisms. Detection mechanisms are usually set with a predefined threshold such that the IT manager is notified about incidents with an alert level that exceeds this threshold. Normally, the threshold is set only according to a static set of user's features (e.g., her role). The *M*-score can be used for implementing a dynamic, context-based, threshold that is higher when only low-sensitive data is involved and lower when the data is highly sensitive. This enables the IT manager to focus on potential misuse incidents that involve more sensitive data.

The present invention provides a method for detecting data leakage and data misuse. The method uses a misuseability weight called M-score and measures the sensitivity level of the data that an insider is exposed to. The method takes into consideration three main factors: the quantity (i.e., table size) and quality (i.e., sensitivity level) of information, and how hard it is to link the information with the related entities. The examples that will be described below which compute the *M*-score, show that the *M*-score measured by the method of the invention is both feasible and can fulfill its main goals.

### Examples

The *number of entities* dimension can highly affect the misuseability of a data table. Therefore, the *M*-score incorporates the quantity factor in its determination (denoted by *r*). However, as stated, in different domains there can be varying definitions about what constitutes a massive leak. In some cases, even a few records of data containing information about a highly important entity are regarded as a big risk. For others, the information itself is secondary to the amount of data that was lost.

In light of these considerations, *M*-score uses the settable parameter *x* for adjusting the effect of the table size on the final score. There are three possible settings for *x*: (1) If the organization wants to detect users who are exposed to a vast amount of data and regards the sensitivity of the data as less important, *x* can be set to 1; (2) If there is little interest in the quantity and only users who were exposed to highly sensitive data are being sought, then *x*→∞; (3) In all other cases, *x* can be set to represent the tradeoff between these two factors.

The illustration in Table 2 presents the *M*-score values for *x*=1, 2 and 100 (as an approximation of infinity) of two identical queries that differ only in the amount of returned customer records. The table shows that when increasing the value of *x,* the difference between the *M*-scores of the two queries becomes less significant.

**Table 2 M-score results for large data with respect to x**

| **Query** | ***x* = 1** | ***x* = 2** | ***x* = 100** |
|---|---|---|---|
| Select top 5,000 "Business" customers | 1166.500 | 16.497 | 0.254 |
| Select top 500 "Business" customers | 116.650 | 5.217 | 0.248 |

The *anonymity level* dimension is also addressed by the *M*-score measure, by taking into consideration the distinguishing factor, since the determination of the *M*-score gives less sensitivity weight to records that are harder to identify. For example, a table that shows only the customer's city will be ranked with a lower *M*-score than the same table if we were to add the user's name to it. In other words, since knowing only customer's city is significantly less useful in order to fully identify her, the distinguishing factor will reflect this status.

The sensitivity factor incorporated in the *M*-score is the way it addresses both the *number of properties* and the *values of properties* dimensions. Usually, exposing more details means that more harm can be inflicted on the organization. If the details also reveal that an entity in the data is a valuable one, the risk is even higher. The *M*-score considers all the different sensitive attributes. This is illustrated in Tables 3A and 3B that show data about the same customer. However, while the latter shows only the customer's average monthly bill, the former also adds his account type. Determining their score results in *M*-score(3A) = min(1, 0.3+0.5) = 0.8, and *M*-score(3B) = min(1, 0.3) = 0.3. As expected, *M*-score (3B), which exposes fewer details, is lower.

The calculation of the *M*-score also considers the specific value of each sensitive attribute. If the account type on Table 3B was 'white', which is less sensitive then 'bronze', than *M*-score(3B) = 0.1.

**Table 3. Example of collecting more details on a customer**

| (A) two sensitive attributes | | | |
|---|---|---|---|
| First Name | Last Name | Account Type | Average Monthly Bill |
| Anton | Richter | Bronze | **$450** |

| (B) one sensitive attributes | | | |
|---|---|---|---|
| First Name | | Last Name | Average Monthly Bill |
| Anton | | Richter | Bronze |

The next section presents an experiment conducted by the inventors. The main goal of this experiment was to check if the *M*-score fulfills its aim of measuring misuseability weight. In addition, one of the main challenges in applying the *M*-score measure is acquiring the knowledge required for deriving the sensitivity score function. Acquiring such a function is a challenging task, especially in domains with large number of attributes, each with many possible values. Then, the function must be able to score many possible combinations. Consequently, two different approaches for acquiring the domain expert knowledge necessary for deriving the sensitivity score function are described and evaluated.

In each of the two approaches presented here, the inventors asked a domain expert to describe her expertise by filling out a relatively short questionnaire. The goal was twofold: to "capture" simply and quickly the relevant knowledge of the domain expert and to collect enough data to extract the expert's intentions. Using this captured knowledge, the scoring model (the sensitivity score function) was then derived by using different methods.

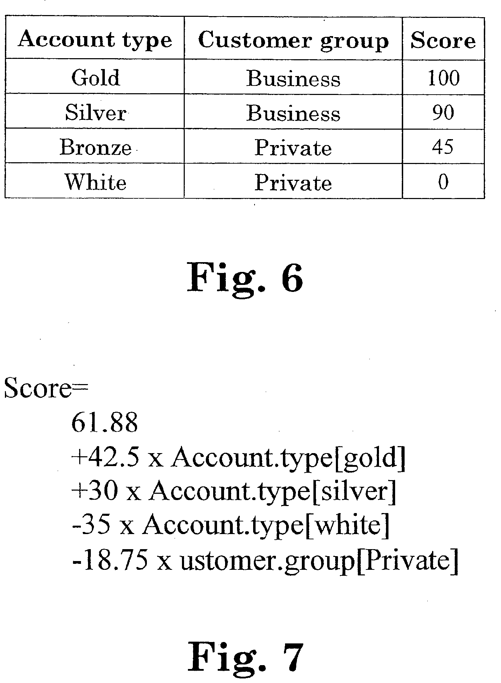

In the first approach, *Record Ranking,* the domain expert is requested to assign a sensitivity score to individual records. Thus, the domain expert expresses the sensitivity level of different combinations of sensitive values. Fig. 6 depicts an example of assigning a sensitivity score (in the range 0 to 100) to 4 records, each with two sensitive attributes.

Once the expert has finished ranking the records, a model generalizing the scored record-set is derived. This model is able to assign a sensitivity score to any given record, even if the combination of values in it did not exist in the record-set ranked by the user beforehand.

There are two challenges when applying the records ranking approach: (1) choosing a record-set that will make it possible to derive a general model that will be as small and compact as possible (since it is not possible to rank all records in the database); and (2) choosing an algorithm for deriving the scoring model.

The first challenge can be addressed in several ways, such as choosing the most frequent records that appear in the database. In this experiment, the *Orthogonal Arrays* method [17] that is usually utilized for reducing the number of cases necessary for regression testing while maximizing the coverage of all sets of *n* combinations, is used.

Tackling the second challenge is a bit more complicated because many different methods, each with its pros and cons, can be chosen for building a knowledge-model from a list of ranked records. One of the most prominent differences between the methods is the functional dependencies among the attributes, and therefore, to derive the function, two different, complementary methods were examined: *linear regression model* and *CART model.*

Linear regression is a well-known statistical method that fits a linear model describing the relationship between a set of attributes and the dependent variables. The regression model is trained on labeled records that include different combinations of the sensitive attribute values (including "blank" as a legal value indicating that the value is unknown). Considering as many different combinations as possible for attribute values in the learning process allows the model to better reflect the real sensitivity function. The problem of finding the *M*-score sensitivity score function is regarded like that of fitting a linear function, and use the sensitivity score given by the domain expert, as shown in Fig. 6. Fig. 7 illustrates a simple regression model trained of record similar to Fig. 6.

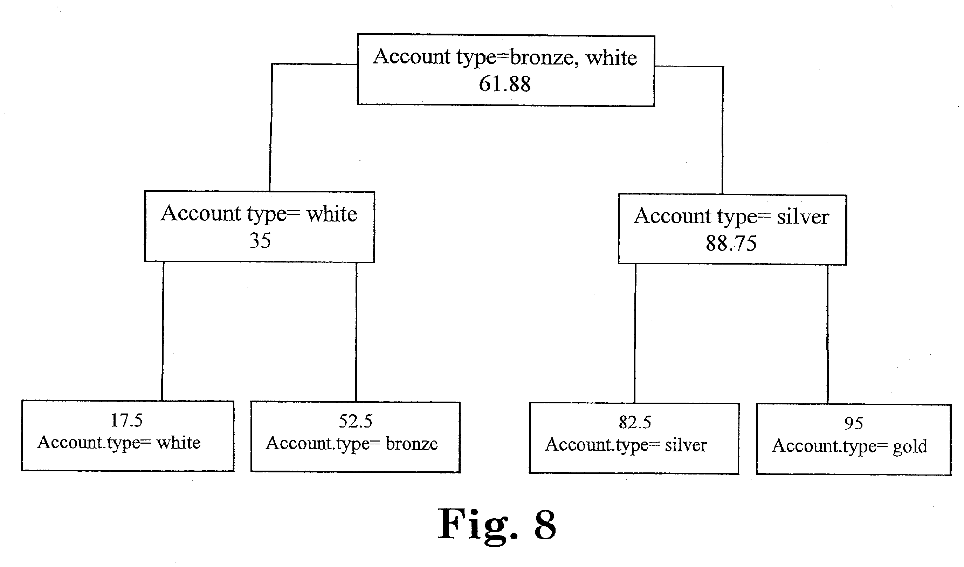

CART (Classification and Regression Tree) [18] is a learning method that uses a tree-like structure in which each split of the tree is a logical if-else condition that considers the value of a specific attribute. In the leaves, CART uses a regression to predict the dependent variable. The tree structure is used because no assumption is made that the relationships between the attributes and the dependent variable are linear. This is the main difference between CART and the linear regression method. For the evaluation of this experiment, R rPart [19] implementation of ANOVA-trees was used, which is a CART-like model. Fig. 8 illustrates an rPart ANOVA-tree created with a dataset similar to Fig. 6. For each split in the tree, the right branch means the condition is true. The left branch indicates that the condition is false.

In both methods, the prediction model is built according to the data collected with the record ranking approach. Then, the sensitivity score function is deduced using the prediction for a given new record. These methods are referred as Records Ranking[LR] (linear regression based on record ranking) and Records Ranking[CART] (CART based on record ranking).

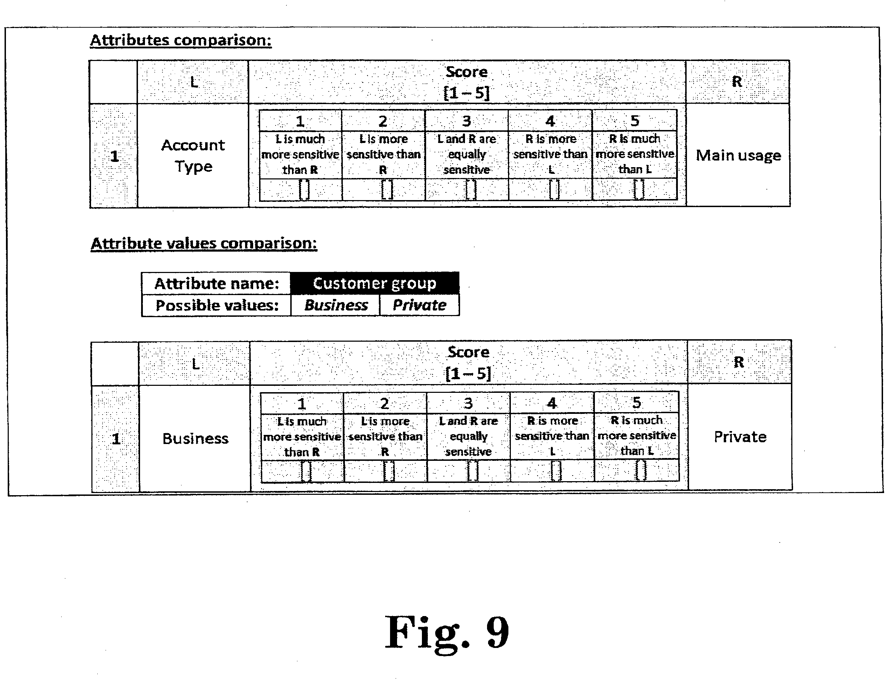

People usually best express their opinion about a subject by comparisons with other subjects, rather than expressing it solely on the given subject, with nothing to compare to [20]. Therefore, the second approach, *Pairwise Comparison,* might help the domain expert to better describe the sensitivity level of an attribute value by allowing her to compare it to different possible values. In the pairwise comparison approach, the domain expert is required to compare pairs of sensitive attributes and pairs of possible values of a specific attribute. Fig. 9 presents a brief example of how an expert can compare different pairs. The figure shows the comparison of two sensitive attributes, and then the comparison of the optional values of the customer group attribute.

In order to derive the scoring model, the analytic hierarchy process (AHP) [21] that is used for deducing preferences based on sets of pair wise comparisons is chosen. AHP is a decision support tool for handling multilevel problems that can be presented as a tree of chosen values. Using the pairwise comparisons data, it weights the importance of each of the values with respect to the other possible values on the same level. Then, the importance of a path in the tree can be extracted by multiplying the weights of the different weights in the path.

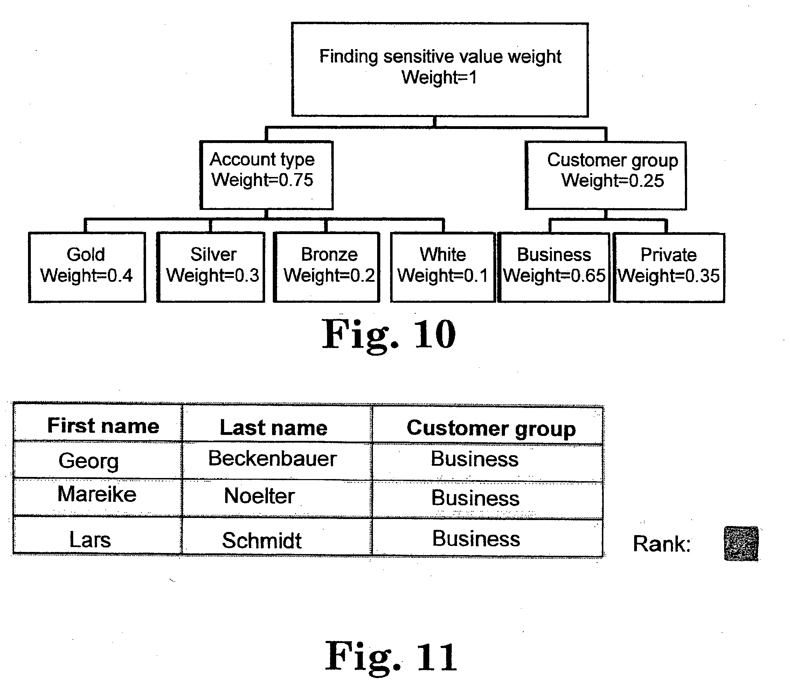

In this case, the problem of finding the sensitivity score function is defined as a 3-level AHP problem (see Fig. 10). The top level defines the problem of finding the weight of a given sensitive attribute value. Having only one option, this level has a single node with a weight of 1. The next level includes the sensitive attributes (e.g., Account type, Customer group). The AHP tree leaves define the possible values of the sensitive attribute (e.g., gold, business). The inventors suggest using pairwise comparisons in which the expert is asked to first compare each possible pair of attributes and then the possible pairs of values of the same attribute. This makes it possible to learn the weight of each node. Then, in order to extract the sensitivity score function, the weight of the path to each value is looked as its sensitivity. For example, using the AHP-tree in Fig. 10, if the sensitivity of Account type silver is inferred, than a simple calculation is needed: $\begin{matrix}weight \left(Finding sensitive value weight\right) \times weight \left(Account type\right) \times \\ weight \left(silver\right) = 1 \times 0.75 \times 0.3 = 0.225\end{matrix}$

Extracting the sensitivity score function with this method results in relative scores, - the sensitivity scores of all leaves of the tree (i.e., the actual values) sum up to 1. Thus, this method, unlike the other methods presented previously, enables the expert to directly define which values are more important than others. This method is referred to as Pairwise Comparison [AHP].

In the experiment, the inventors attempted to answer the following research questions:
1. Most important, does the *M*-score fulfill its goal of weighting the misuseability weight of tables of data?
2. Which method (Records Ranking [LR], Records Ranking [CART] or Pairwise Comparison [AHP]) creates the knowledge-model that calculates the sensitivity score function which best fits the scores given by the domain expert?
3. Which approach (record ranking or pairwise comparisons) allows the expert to give sufficient information for creating good models within the shortest period of time?
4. Which approach do the domain experts prefer?
5. Is it feasible to derive a model that can rank the sensitivity of data records using a domain expert's knowledge?

For simplicity, the inventors conducted the experiment as if a single context exists. However, the acquiring and analysis methods that are presented can be easily extended to deal with multiple contexts (e.g., by acquiring the data from the experts with respect to the context and creating a model-per-context).

In order to conduct the experiment, the inventors designed a four-part questionnaire. The first two parts of the questionnaire (A and B) were utilized to acquire knowledge from the experts using the two approaches presented in above (record ranking and pairwise comparison). The last two parts of the questionnaire (C and D) were used for evaluating the quality of the knowledge-model created.

Since domain experts from Deutsche Telekom were to answer the questionnaire, the customer records from the cellular phone service domain were used, as presented in Fig. 2. The attributes "days to contract expiration" and "monthly average bill" were made discrete by the experts according to predefined ranges.

In part A of the questionnaire, records containing one of the different possible values of each sensitive attribute are presented. In each record, there were also "blanks" in some of the attributes, indicating that the values of these attributes are unknown. The records in this part were selected by using the *Orthogonal Arrays* method and covering all 3-way possibilities (all combinations of 3 different values of all the attributes). The participant was asked to rank the sensitivity level of each of the given records on a scale of 0 to 100 (similar to Fig. 6). Using the ranked records, knowledge models were derived using both the Records Ranking [LR] and Records Ranking[CART] methods.

In part B, pairs <L , R> of sensitive attributes or their values were presented to the participant who was asked to decide which of the two possibilities is more sensitive on a scale of 1 (L is much more sensitive than R) to 5 (R is much more sensitive than L) as shown in Fig. 9. This scale was chosen according to psychological studies, which have shown that it is best to use discrete scales of 7±2, depending on the granularity level needed in the decision [22]. With the data acquired from this part, the Pairwise Comparison [AHP] sensitivity score function was extracted.

In both parts A and B, the time required for completing the questions was measured. In addition, the participant was asked to rank which part was more difficult to complete on a scale of 1 (A was much more difficult) to 5 (B was much more difficult).

Part C of the questionnaire included a list of tables containing both customer identifiers and sensitive data. Each table contained a different subset of attributes from the set of sensitive and identifying attributes on Fig. 2. The participant was asked to assign a sensitivity rank between 0 and 100 to each of the tables. Fig. 11 shows an example of a table that appeared in this part in the questionnaire.

In the last part of the questionnaire (part D) pairs of tables, such as the table shown in Fig.11, were presented to the participant who was asked to decide which of the two tables is more sensitive.

In order to address research question 2 - which method creates the most accurate sensitivity score function, the 10 questionnaires that Deutsche Telekom security experts completed was analyzed. For the analysis, parts C and D in each questionnaire were used to evaluate the different sensitivity score functions created using the data collected in parts A and B.

First, the tables from part C were ranked with the different *M*-scores extracted from the three sensitivity score functions. The three sensitivity score functions are referred as *M*-score-LR (for the *M*-score that is calculated using the Records Ranking [LR] model); *M*-score-CART (using Records Ranking [CART]); and *M*-score-AHP. Then, using these ranks and the ranks that were given by the expert to each table, four vectors (*M*-score-LRi, *M*-score-CARTi, *M*-score-AHPi and Expert-scorei, respectively, where *i* represents the specific expert) were constructed. The vectors were sorted according to the sensitivity of the tables, from the least sensitive table to the most sensitive one. Finally, using the *Kendall Tau* measure [23] each of the *M*-score vectors were compared to the Expert-scorei vector. The *Kendall Tau* measure is a known statistic test for ranking the similarity of ordering of vector coefficients. It assigns ranks in the range [-1, 1], when -1 indicates that one vector is the reverse order of the other and 1 indicates the vectors are identical. Consequently, in this example ranks as close to 1 as possible are desired.

In order to measure the accuracy of each of the methods, the comparisons from part D were used. First, as in part C, each table's vectors was calculated. Then, using these calculated *M*-scores, each comparison was "classified" to one of three classes: L (i.e., left table is more sensitive); R (right table is more sensitive); or E (the tables are equally sensitive). Finally, using the class given by the expert in the questionnaire, the classification accuracy of each *M*-score was measured.

Table 4A depicts the Kendall Tau measure results of the correlation between pairs of the Expert-scorei vector and each of the other *M*-score vectors. On all tests, the p-value indicates that the correlation was statistically significant. From the table it can be seen that the Pairwise Comparison [AHP] model gave the best results (τ=0.512, which means the vectors are 75.64% correlated), followed by the Records Ranking [LR] (0.488, 74.43%).

Table 4B depicts the results of the classification accuracy. While analyzing the results, many situations where the expert classified a pair as class E (both tables are equally sensitive) were encountered. However, the determined tables *M*-scores were very close, but were not exactly equal. Thus, many pairs that could actually be considered as class E were classified as R or L. Therefore, in addition to the regular accuracy determination that appears in Table 4B an "extended accuracy" was added that also considers comparisons when the difference between the determined *M*-scores of both tables is insignificant. These pairs were counted with a lower weight (0.5) in the extended accuracy calculation. (That is, if a pair was not classified as E, but the calculated *M*-scores of the tables in this pair were very close, 0.5 was added to the accuracy numerator). From the table it can see that the Records Ranking [LR] model was the most accurate (average accuracy=0.69, avg. extended accuracy=0.8), followed by the Pairwise Comparison [AHP] (0.66 and 0.77, respectively).

From the results, it is not clear which method created the best sensitivity score function. It can be noted, though, that both Records Ranking [LR] and Pairwise Comparison [AHP] significantly outperformed the Records Ranking [CART].

**Table 4. Experiment results on expert vectors**

| **(A)Kendall Tau results on expert vectors** | | |
|---|---|---|
| Vectors | Average τ (% correlation | p-value |
| Expert-scorei : M-score-LRi | 0.488 (74.43%) | < 0.01 |
| Expert-scorei : M-score-CARTi | 0.477 (73.86%) | < 0.01 |
| Expert-scorei : M-score-AHPi | 0.512 (75.64%) | < 0.01 |

| **(B)ACCURACY OF THE METHODS** | | |
|---|---|---|
| Method | Average Accuracy | Average Extended Accuracy |
| Regression | 0.69 | 0.8 |
| CART | 0.57 | 0.67 |
| AHP | 0.66 | 0.77 |

As was stated above, the time each participant took to complete parts A (record ranking) and B (pairwise comparisons) were measured. The results showed that the time to complete part A (25 minutes on average) was considerably longer than the time to complete part B (7 minutes on average). *Paired two sample for means T-test* showed that these results are statistically significant (P(T<=t) < 0.01).

After participants had finished both parts A and B, they were asked to express an opinion about which part was harder to complete on a range of 1 (part B was much harder) to 5 (part A was much harder). Of the 10 participants, 8 responded with a 5; and the average of the responses was 4.7. It is assumed that this fact is strongly connected to the fact that completing part A took more than 3 times longer than part B.

In addition to the Kendall Tau that was calculated for each expert, as shown in Table 4a, the Kendall Tau on pairs of vectors across experts was also computed. For each type of vector - *M*-score-LRi, *M*-score-CARTᵢ, *M*-score-AHPi and Expert-scorei - pairs of the same vector type across all experts were matched.

Table 5 presents the average results for that experiment, and the average for all the methods vectors (i.e., excluding the Expert-scorei). Interestingly, the correlation between the different expert ranks (τ=0.391) is significantly lower than the models correlation (0.797 in average).

**Table 5 Average Kendall Tau between all pairs i,k of experts**

| Vectors | Average τ (% correlation) | p-value |
|---|---|---|
| Expert-scorei : Expert-scorek | 0.391 (69.55%) | < 0.05 |
| M-score-LRi : M-score-LRk | 0.812 (90.65%) | < 0.05 |
| M-score-CARTi: M-score-CARTk | 0.839 (91.95%) | < 0.05 |
| M-score-AHPi: M-score-AHPk | 0.74 (87.02%) | < 0.05 |
| Average of models' vectors (M-score-LRi, M-score-CARTi, M-score-AHPi) | 0.797 (89.87%) | < 0.05 |

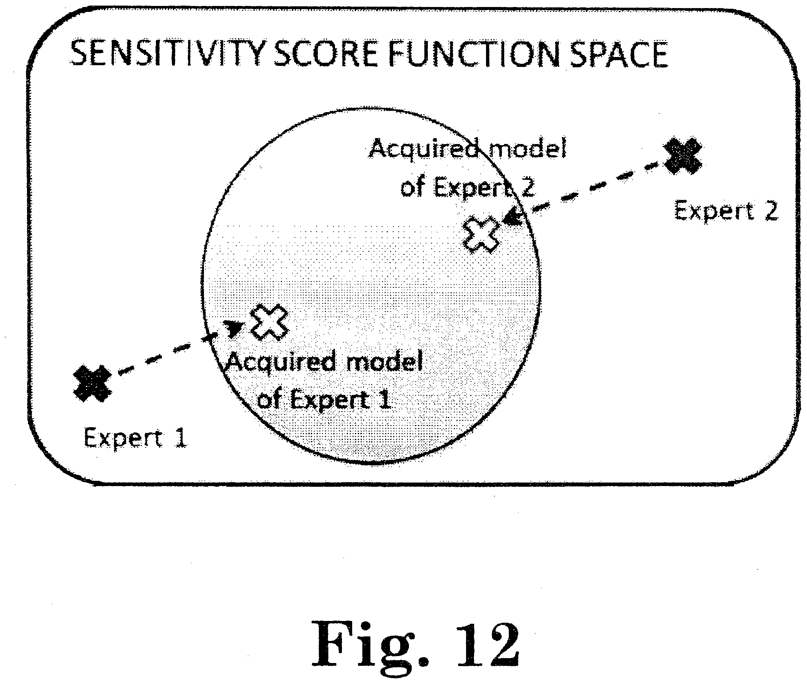

This fact might be explained by Fig. 12. The figure illustrates the space of all possible sensitivity score functions, when the marks of **Expert 1** and **Expert 2** show the specific functions of these experts in the space. Since the methods proposed for deriving expert functions are rather simple, they are limited to creating only a subset of all possible score functions, which are only a sub-space (as illustrated by the circle in the figure). Thus, the sensitivity score functions of different experts, as reflected by the models (shown in the figure as **Acquired model of Expert 1** and **Acquired model of Expert 2),** are closer to each other and therefore have a stronger correlation. This fact is very important because it allows the assumption to be made that using knowledge acquired from one expert is sufficient to calculate the *M*-score for the entire domain.

The main goal of this experiment was to find whether the *M*-score fulfills its goal of measuring misuseability weight (research question 1). To test this, the top three most sensitive tables for every Expert-scorei, *M*-score-LRi, *M-*score-CARTi and *M*-score-AHPi vector were examined, for each expert *i.* In 95.55% of the cases, the same three tables were the most sensitive for all the vectors of the same expert. Another important observation is that when the instances of disagreement between the determined *M*-score and the expert's score was calculated in regard to analyzing the cases that lowered either the Kendall Tau or the accuracy, it was discovered that in many cases the intention of the expert was better expressed in the calculation and not by her own score. For example, in one case one expert clearly expressed on the pair wise comparison (part B) that the 'data' value of the Main usage attribute was much more sensitive than all the other values. However, in part D, the expert indicated that customer records with different Main usage values are more sensitive. After showing the expert this case, he indeed admitted being wrong in his answer on part D. It is believed that directly ranking tables as a method of creating misuseability measure, although possible, is much more cognitively complicated and would be much less accurate.

Another goal was to find the best approach for acquiring the sensitivity score function, in terms of accuracy, time and experts' preferences (research questions 2, 3 and 4). The results show that the accuracy and correlation of the Records Ranking [CART] were significantly lower than the other two methods. On the other hand, both Records Ranking [LR] and Pairwise Comparison [AHP] presented good results that were fairly equal. The main drawback of the record ranking approach was the time required for acquiring the necessary data. In addition, participants strongly rejected this approach (possibly, as a result of the time factor). Although the Pairwise Comparison [AHP] model results do not suffer from these drawbacks, it lacks the ability to handle non-discrete attributes. In the experiment, for example, two attributes were made discrete, and if only the records ranking methods were used, these attributes could have been left non-discrete and given the expert concrete values to rank rather than fixed ranges. To conclude, if the domain contains only discrete attributes, or if a set of fixed ranges to the non-discrete attributes can be defined, the Pairwise Comparison [AHP] is the preferred approach to eliciting expert knowledge and deriving the sensitivity score. If discrete attributes cannot be made discrete, then the use of Records Ranking [LR] to create the knowledge-model is preferred.

The last goal (research question 5) was to understand whether it is feasible to derive a knowledge-model that can be used as sensitivity score function by collecting a reasonable amount of expert data. The experiment shows that deriving such model is indeed feasible and that the expert only needs to make a relatively small effort to supply enough data. To emphasize the feasibility of learning the expert's knowledge, the presented results can be compared to a base line of randomly ranked records (in part A), and randomly compared attributes\values (in part B). Random behavior brings the Kendall Tau values to approximately 0 (∼50% correlation), as opposed to a ∼75% correlation using expert knowledge. The extended accuracy of the random approach stands at approximately 0.55, while with expert knowledge it can reach 0.8.

Although embodiments of the invention have been described by way of illustration, it will be understood that the invention may be carried out with many variations, modifications, and adaptations, without exceeding the scope of the claims.

### References

[1] 2010 CyberSecurity Watch Survey, http://www.cert.org/archive/pdf/ecrimesummary10.pdf
[2] A. Kamra, E. Terzi, and E. Bertino, "Detecting Anomalous Access Patterns in Relational Databases," International Journal on Very Large Databases, vol. 17, no. 5, pp. 1063-1077. 2008.
[3] S. Mathew, M. Petropoulos, H. Q. Ngo, and S. Upadhyaya, "Data-Centric Approach to Insider Attack Detection in Database Systems," Proc.of the 13th International Symposium on Recent Advances in Intrusion Detection (RAID '10), 2010.
[4] L. Sweeney, "k-Anonymity: a model for protecting privacy," International journal on uncertainty, Fuzziness and knowldege based systems, vol. 10, no. 5, pp. 571-588, 2002.
[5] A. Machanavajjhala, D. Kifer, J. Gehrke, and M. Venkitasubramaniam, "l-diversity: Privacy beyond k-anonymity," ACM Trans. on Knowledge Discovery from Data, vol. 1 , no. 1, 2007.
[6] R. C. Wong, L. Jiuyong, A. W. Fu and W. Ke, "(α,k)-Anonymity: An Enhanced k-Anonymity Model for Privacy-Preserving Data Publishing," Proc. of the 12th ACM SIGKDD international conference on Knowledge discovery and data mining, 2006.
[7] E. Celikel, M. Kantarcioglu, B. Thuraisingham and E. Bertino, "A risk management approach to RBAC," Risk and Decision Analysis, vol. 1, no. 2, pp. 21-33, 2009.
[8] B. Carminati, E. Ferrari, J. Cao, and K. Lee Tan, "A framework to enforce access control over data streams," ACM Trans. Inf. Syst. Secur, vol. 13, no. 3, 2010.
[9] Q. Yaseen, and B. Panda, "Knowledge Acquisition and Insider Threat Prediction in Relational Database Systems," Proc. of IEEE International Conference on Computational Science and Engineering (CSE '09), pp. 450-455, 2009.
[10] G. B. Magklaras and S. M. Furnell, "Insider Threat Prediction Tool: Evaluating the probability of IT misuse," Computers & Security, vol. 21, no. 1, pp. 62-73, 2002
[11] M. Bishop and C. Gates. "Defining the insider threat,"Proc. 4th annual workshop on Cyber security and information intelligence research (CSIIRW '08), pp. 1-3, 2008
[12] C. M. Fung, K. Wang, R. Chen, and P. S. Yu, "Privacy-preserving data publishing: A survey on recent developments," ACM Computing Surveys, vol. 42, no. 4, June 2010.
[13] T. Dalenius, "Finding a Needle in a Haystack or Identifying Anonymous Census Records," Journal of Official Statistics, vol. 2, no. 3, pp. 329-336, 1986.
[14] B. Berendt, O. Günther, and S. Spiekermann, "Privacy in e-commerce: stated preferences vs. actual behavior," Comm. of the ACM, vol. 48, no. 4, pp. 101-106, 2005.
[15] A. Barth, A. Datta, J. C. Mitchell and H. Nissenbaum, "Privacy and Contextual Integrity: Framework and Applications," Proc. of IEEE Symposium on Security and Privacy, pp. 184-198, 2006.
[16] E.Bertino,and R.Sandhu. "Database Security-Concepts, Approaches, and Challenges, "IEEE Trans. on Dependable and Secure Computing, vol. 2 , no. 1, pp. 2-19, 2005
[17] A. S. Hedayat, N. J. A. Sloane, and J. Stufken, Orthogonal Arrays - Theory and Applications. New York: Springer-Verlag, 1999.
[18] L. Breiman, J. Friedman, R. Olshen, and C. Stone, Classification and Regression Trees. Monterey, Calif.:Wadsworth and Brooks, 1984.
[19] R Development Core Team. R: A language and environment for statistical computing. R Foundation for Statistical Computing, Vienna, Austria. http://www.R-project.org. 2010.
[20] T. Satty, "A scaling method for priorities in hierarchical structures," Journal of mathematical psychology, vol. 125, pp. 234-281, 1977.
[21] T. Satty, Multicriteria Decision Making: The Analytic Hierarchy Process. New York, NY: McGraw-Hill, 1980.
[22] G. A. Miller, "The magical number seven, plus or minus two: Some limits on our capacity for processing information," The Psychological Review, vol. 63, no. 2, pp. 81-97, 1956.
[23] M.Lapata, "Automatic evaluation of information ordering: Kendall's tau," Comput. Linguist., vol. 32, no. 4, pp. 471-484, 2006.
[24] Amir Harel, et al., "M-score: estimating the potential damage of data leakage incident by assigning misusability weight", PROCEEDINGS OF THE 2010 ACM WORKSHOP ON INSIDER THREATS, INSIDER THREATS '10, 1 October 2010, pg. 13 XP055298305, New York, N.Y., USA.

## Claims

1. A computerized method for determining *M*-score for use in detecting data leakage and data misuse in a computer system belonging to an organization, wherein said computer system comprises:
a) at least one database that contains said organization's data;
b) at least one application server configured to receive queries from users, to communicate with and receive data from at least one of said databases, and to construct from said data a publication, which is a table comprising data records;
c) at least one user device configured to be used by a user to send queries to said at least one application server and to receive publications returned by said application server;
d) at least one *M*-score server configured to determine a *M*-score for all publications returned by said application servers to all queries submitted by said user during a time frame *F*; and
e) communication links between the components of said system, **characterized in that**, said method, which is executed by said at least one *M*-score server, comprises carrying out a recursive *Construct Publication Ensemble* procedure comprising the following steps:
A) if no previous publications exist, return new publication *Tₙ*;
B) if previous publications exist, create for each new publication an ensemble set *E* of all the previous publications that are within the time frame *F*;
C) return a resulting ensemble set *E*; and
D) determine the *M*-score for the publication *Tₙ* returned in step A or for the ensemble of publications *E* returned in step C according to the following four step procedure:
i) determining a raw record score for each record in the publication or ensemble;
ii) determining a record distinguishing factor for each record in the publication or ensemble;
iii) determining a final record score for the publication or ensemble using said distinguishing factor and said raw record score; and
iv) combining said final record score with a quantity factor in order to determine said *M*-score for the publication or ensemble.

2. The method according to claim 1 wherein step (ii) comprises determining a rank that indicates the efforts a user has to invest in order to find the exact identifier looked for.

3. The method according to claim 2 wherein the rank that is determined reflects the minimal value of all quasi-identifier counts in case of multiple quasi-identifiers in a dataset.

4. The method of claim 1 wherein determining an M-score comprises taking into account prior knowledge, wherein said prior knowledge includes previous dataset knowledge already exposed to the user and/or knowledge on the definition of the dataset.

5. The method according to claim 4 wherein the prior knowledge is the set of sensitive attributes that are included in request *R* constraints and the set of attributes in the published dataset that is retrieved following request *R.*

6. The method according to claim 1 wherein the *M*-score is used for improving performance of existing detection procedures.

7. A method of using the *M*-score determined in claim 1 to regulate user access to sensitive datasets, said method, which is executed by at least one of said *M*-Score servers, comprises the steps of:
a) assigning a misuseability clearance to each user;
b) carrying out a recursive *Construct Publication Ensemble* procedure for all queries said user submits to said system server by means of his/her user device during a given time frame;
c) determining said *M*-score for an ensemble set returned by said *Construct Publication Ensemble* procedure ;
d) comparing the determined *M*-score with said misuseability clearance; and
e) preventing presentation of data if said user has a low misuseability clearance compared to said derived *M*-score.

8. A method of using the *M*-score determined in claim 1 to regulate user access to sensitive datasets, said method, which is executed by at least one of said *M*-Score servers, comprises the steps of:
a) assigning a misuseability clearance to each user;
b) carrying out a recursive *Construct Publication Ensemble* procedure for all queries said user submits to said system server by means of his/her user device during a given time frame;
c) determining said *M*-score for an ensemble set returned by said *Construct Publication Ensemble* procedure;
d) comparing the determined *M*-score with said misuseability clearance; and
e) presenting a subset of the result-set if said user has a low misuseability clearance compared to said derived *M*-score.

9. The method according to either claim 7 or claim 8 wherein in step (a) misuseability clearance is assigned according to normal behavior during a learning phase.

10. The method according to either claim 7 or claim 8 comprising activating an alert system if said user has a low misuseability clearance compared to said derived M-score.

11. The method of claim 1, wherein the recursive *Construct Publication Ensemble* procedure comprises the following steps: 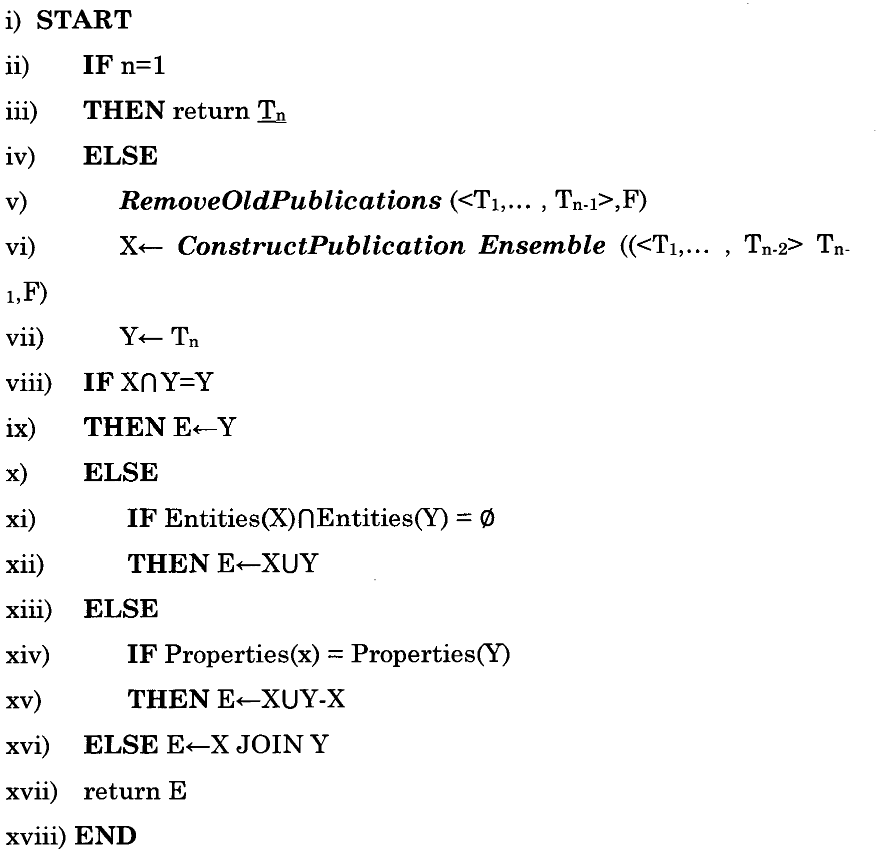 wherein, X and Y are two sequential publications; <*Ti,* ... , *T*_{*n*-*1*}> are the previous publications; *Tₙ* is the current (new) publication; *F* is the time frame in which a previous publication should still be considered; Entities (X) are all the values of the identifiers attributes in publication X; Properties (X) are all the sensitive attributes of publication (X); Entities (Y) are all the values of the identifiers attributes in publication Y; and Properties (Y) are all the sensitive attributes of publication (Y).

## Patentansprüche

1. Computergestütztes Verfahren zum Bestimmen eines *M*-Scores zur Verwendung beim Erfassen von Datenlecks und Datenmissbrauch in einem Computersystem, das einer Organisation gehört, wobei das Computersystem Folgendes umfasst:
a) mindestens eine Datenbank, die die Daten der Organisation enthält;
b) mindestens einen Anwendungsserver, konfiguriert zum Empfangen von Abfragen von Benutzern, zum Kommunizieren mit und zum Erhalten von Daten von mindestens einer der Datenbanken und zum Erstellen einer Publikation aus den Daten, die eine Tabelle ist, die Datensätze umfasst;
c) mindestens ein Benutzergerät, konfiguriert, um von einem Benutzer verwendet zu werden, um Abfragen an den mindestens einen Anwendungsserver zu senden und Publikationen, die von dem Anwendungsserver zurückgesendet werden, zu empfangen;
d) mindestens einen *M*-Score-Server, konfiguriert zum Bestimmen eines *M*-Scores für alle Publikationen, die von den Anwendungsservern an alle Abfragen zurückgesendet werden, die von dem Benutzer innerhalb eines Zeitfensters *F* übermittelt werden; und
e) Kommunikationsverbindungen zwischen den Komponenten des Systems,
**dadurch gekennzeichnet, dass** das Verfahren, das von dem mindestens einen *M*-Score-Server ausgeführt wird, Ausführen einer rekursiven *Construct-Publication-Ensemble*-Prozedur umfasst, die die folgenden Schritte umfasst:
A) wenn keine früheren Publikationen existieren, Zurücksenden einer neuen Publikation *Tₙ*;
B) wenn frühere Publikationen existieren, Erstellen eines Ensemble-Satzes *E* aller früheren Publikationen, die innerhalb des Zeitfensters *F* liegen, für jede neue Publikation;
C) Zurücksenden eines resultierenden Ensemble-Satzes *E*; und
D) Bestimmen des *M*-Scores für die in Schritt A zurückgesendete Publikation *Tₙ* oder für das in Schritt C zurückgesendete Ensemble von Publikationen *E* gemäß der folgenden vierstufigen Prozedur:
i) Bestimmen eines Rohdatensatz-Scores für jeden Datensatz in der Publikation oder in dem Ensemble;
ii) Bestimmen eines Datensatzunterscheidungsfaktors für jeden Datensatz in der Publikation oder in dem Ensemble;
iii) Bestimmen eines endgültigen Datensatz-Scores für die Publikation oder für das Ensemble unter Verwendung des Unterscheidungsfaktors und des Rohdatensatz-Scores; und
iv) Kombinieren des endgültigen Datensatz-Scores mit einem Mengenfaktor, um den *M*-Score für die Publikation oder für das Ensemble zu bestimmen.

2. Verfahren nach Anspruch 1, wobei der Schritt (ii) Bestimmen eines Rangs umfasst, der die Anstrengungen anzeigt, die ein Benutzer aufbringen muss, um die genaue Kennung zu finden, die gesucht wird.

3. Verfahren nach Anspruch 2, wobei der Rang, der bestimmt wird, den Minimalwert aller Anzahlen von Quasi-Kennungen im Falle von mehreren Quasi-Kennungen in einem Datensatz widerspiegelt.

4. Verfahren nach Anspruch 1, wobei Bestimmen eines *M*-Scores Berücksichtigen von Vorkenntnissen umfasst, wobei die Vorkenntnisse vorherige Datensatzkenntnisse, die dem Benutzer bereits offengelegt wurden, und/oder Kenntnisse über die Definition des Datensatzes beinhalten.

5. Verfahren nach Anspruch 4, wobei die Vorkenntnisse der Satz von sensiblen Attributen, die in Beschränkungen einer Anforderung *R* enthalten sind, und der Satz von Attributen in dem publizierten Datensatz sind, der nach der Anforderung *R* abgerufen wird.

6. Verfahren nach Anspruch 1, wobei der *M*-Score zum Verbessern der Leistungsfähigkeit bestehender Erfassungsprozeduren verwendet wird.

7. Verfahren zum Verwenden des in Anspruch 1 bestimmten *M*-Scores zum Regulieren eines Benutzerzugriffs auf sensible Datensätze, wobei das Verfahren, das von mindestens einem der *M*-Score-Server ausgeführt wird, die folgenden Schritte umfasst:
a) Zuweisen einer Missbrauchsunbedenklichkeitsbescheinigung an jeden Benutzer;
b) Ausführen einer rekursiven *Construct-Publication-Ensemble-*Prozedur für alle Abfragen, die der Benutzer mit seinem Benutzergerät innerhalb eines bestimmten Zeitfensters an den Systemserver übermittelt;
c) Bestimmen des *M*-Scores für einen Ensemble-Satz, der durch die *Construct-Publication-Ensemble-Prozedur* zurückgesendet wird;
d) Vergleichen des bestimmten *M*-Scores mit der Missbrauchsunbedenklichkeitsbescheinigung; und
e) Verhindern der Vorlage von Daten, wenn der Benutzer im Vergleich zu dem abgeleiteten *M*-Score eine niedrige Unbedenklichkeitsbescheinigung aufweist.

8. Verfahren zum Verwenden des in Anspruch 1 bestimmten *M*-Scores zum Regulieren eines Benutzerzugriffs auf sensible Datensätze, wobei das Verfahren, das von mindestens einem der *M*-Score-Server ausgeführt wird, die folgenden Schritte umfasst:
a) Zuweisen einer Missbrauchsunbedenklichkeitsbescheinigung an jeden Benutzer;
b) Ausführen einer rekursiven *Construct-Publication-Ensemble-*Prozedur für alle Abfragen, die der Benutzer mit seinem Benutzergerät innerhalb eines bestimmten Zeitfensters an den Systemserver übermittelt;
c) Bestimmen des *M*-Scores für einen Ensemble-Satz, der durch die *Construct-Publication-Ensemble-Prozedur* zurückgesendet wird;
d) Vergleichen des bestimmten *M*-Scores mit der Missbrauchsunbedenklichkeitsbescheinigung; und
e) Vorlegen einer Teilmenge der Ergebnismenge, wenn der Benutzer im Vergleich zu dem abgeleiteten *M*-Score eine niedrige Unbedenklichkeitsbescheinigung aufweist.

9. Verfahren nach Anspruch 7 oder Anspruch 8, wobei in Schritt (a) eine Unbedenklichkeitsbescheinigung gemäß dem normalen Verhalten während einer Lernphase zugewiesen wird.

10. Verfahren entweder nach Anspruch 7 oder nach Anspruch 8, umfassend Aktivieren eines Warnsystems, wenn der Benutzer im Vergleich zu dem abgeleiteten *M*-Score eine niedrige Missbrauchsunbedenklichkeitsbescheinigung aufweist.

11. Verfahren nach Anspruch 1, wobei die rekursive *Construct-Publication-*Ensemble-Prozedur die folgenden Schritte umfasst: 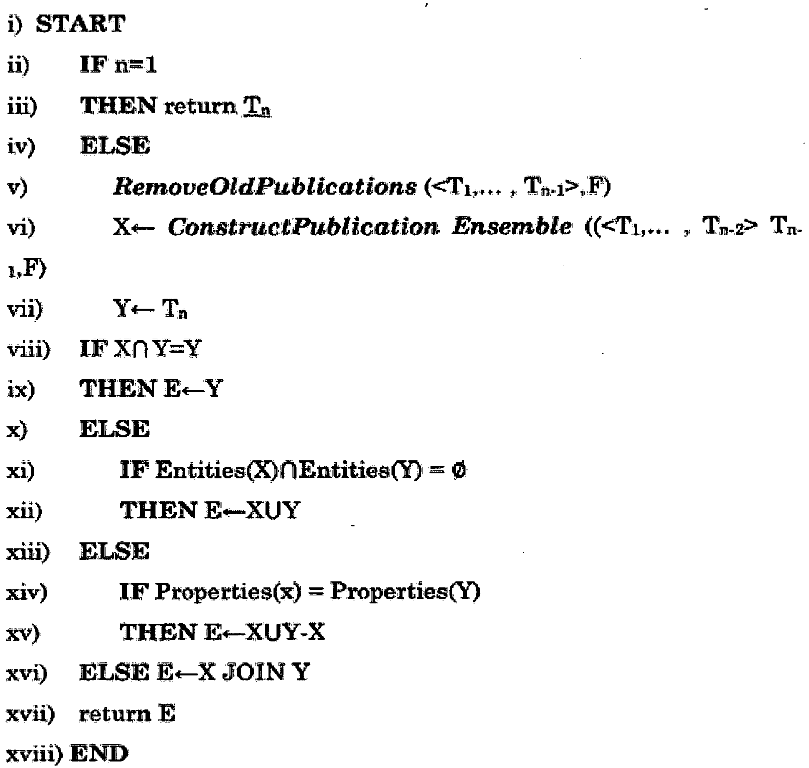 wobei X und Y zwei aufeinanderfolgende Publikationen sind; <*T₁, ..., Tₙ₋₁*> sind die früheren Publikationen sind; *Tₙ* ist die aktuelle (neue) Publikation ist; F das Zeitfenster ist, in dem eine frühere Publikation noch in Betracht gezogen werden sollte; Entitäten (X) sind alle Werte der Kennungsattribute in der Publikation X; Eigenschaften (X) sind alle sensiblen Attribute der Publikation (X); Entitäten (Y) sind alle Werte der Kennungsattribute in Publikation Y; und Eigenschaften (Y) sind alle sensiblen Attribute der Publikation (Y).

## Revendications

1. Procédé informatisé pour déterminer un score M pour une utilisation au niveau de la détection d'une fuite de données et d'une mauvaise utilisation de données dans un système informatique qui appartient à une organisation, dans lequel ledit système informatique comprend :
a) au moins une base de données qui contient lesdites données de l'organisation ;
b) au moins un serveur d'application qui est configuré de manière à ce qu'il reçoive des requêtes en provenance d'utilisateurs, de manière à ce qu'il communique avec au moins l'une desdites bases de données et de manière à ce qu'il reçoive des données depuis celle-ci, et de manière à ce qu'il construise, à partir desdites données, une publication, laquelle est une table qui comprend des enregistrements de données ;
c) au moins un dispositif d'utilisateur qui est configuré de manière à ce qu'il soit utilisé par un utilisateur pour envoyer des requêtes sur ledit au moins un serveur d'application et pour recevoir des publications qui sont retournées par ledit serveur d'application ;
d) au moins un serveur de score M qui est configuré de manière à ce qu'il détermine un score M pour toutes les publications qui sont retournées par lesdits serveurs d'applications pour toutes les requêtes qui sont soumises par ledit utilisateur pendant une trame temporelle F ; et
e) des liaisons de communication entre les composants dudit système, **caractérisé en ce que** ledit procédé, qui est exécuté par ledit au moins un serveur de score M, comprend la mise en oeuvre d'une procédure récursive de construction d'un ensemble de publications/*Construct Publication Ensemble* qui comprend les étapes qui suivent :
A) si aucune publication antérieure n'existe, le retour d'une nouvelle publication Tₙ ;
B) si des publications antérieures existent, la création, pour chaque nouvelle publication, d'un jeu d'ensemble E de toutes les publications antérieures qui sont à l'intérieur de la trame temporelle F ;
C) le retour d'un jeu d'ensemble résultant E ; et
D) la détermination du score M pour la publication Tₙ qui est retournée au niveau de l'étape A ou pour l'ensemble de publications E qui est retourné au niveau de l'étape C conformément à la procédure à quatre étapes qui suit :
i) la détermination d'un score d'enregistrement brut pour chaque enregistrement dans la publication ou l'ensemble ;
ii) la détermination d'un facteur de distinction d'enregistrement pour chaque enregistrement dans la publication ou l'ensemble ;
iii) la détermination d'un score d'enregistrement final pour la publication ou l'ensemble en utilisant ledit facteur de distinction et ledit score d'enregistrement brut ; et
iv) la combinaison dudit score d'enregistrement final avec un facteur de quantité de manière à déterminer ledit score M pour la publication ou l'ensemble.

2. Procédé selon la revendication 1, dans lequel l'étape (ii) comprend la détermination d'un rang qui indique les efforts qu'un utilisateur doit déployer afin de trouver l'identifiant exact recherché.

3. Procédé selon la revendication 2, dans lequel le rang qui est déterminé reflète la valeur minimum de tous les comptages de quasi-identifiant dans le cas de multiples quasi-identifiants dans un jeu de données.

4. Procédé selon la revendication 1, dans lequel la détermination d'un score M comprend la prise en compte d'une connaissance antérieure, dans lequel ladite connaissance antérieure inclut une connaissance antérieure de jeu de données déjà exposée à l'utilisateur et/ou une connaissance portant sur la définition du jeu de données.

5. Procédé selon la revendication 4, dans lequel la connaissance antérieure est le jeu d'attributs sensibles qui sont inclus dans des contraintes de requête R et le jeu d'attributs dans le jeu de données publié qui est récupéré suite à la requête R.

6. Procédé selon la revendication 1, dans lequel le score M est utilisé pour améliorer la performance de procédures de détection existantes.

7. Procédé d'utilisation du score M déterminé selon la revendication 1 pour réguler un accès par utilisateur à des jeux de données sensibles, ledit procédé, qui est exécuté par au moins l'un desdits serveurs de score M, comprend les étapes qui sont constituées par :
a) l'attribution d'une autorisation de mauvaise utilisation à chaque utilisateur ;
b) la mise en oeuvre d'une procédure récursive de construction d'un ensemble de publications pour toutes les requêtes que ledit utilisateur soumet audit serveur système au moyen de son dispositif d'utilisateur pendant une trame temporelle donnée ;
c) la détermination dudit score M pour un jeu d'ensemble qui est retourné par ladite procédure de construction d'un ensemble de publications;
d) la comparaison du score M déterminé avec ladite autorisation de mauvaise utilisation ; et
e) l'empêchement de la présentation de données si ledit utilisateur dispose d'une autorisation de mauvaise utilisation faible par comparaison avec ledit score M dérivé.

8. Procédé d'utilisation du score M déterminé selon la revendication 1 pour réguler un accès par utilisateur à des jeux de données sensibles, ledit procédé, qui est exécuté par au moins l'un desdits serveurs de score M, comprend les étapes qui sont constituées par :
a) l'attribution d'une autorisation de mauvaise utilisation à chaque utilisateur ;
b) la mise en oeuvre d'une procédure récursive de construction d'un ensemble de publications pour toutes les requêtes que ledit utilisateur soumet audit serveur système au moyen de son dispositif d'utilisateur pendant une trame temporelle donnée ;
c) la détermination dudit score M pour un jeu d'ensemble qui est retourné par ladite procédure de construction d'un ensemble de publications;
d) la comparaison du score M déterminé avec ladite autorisation de mauvaise utilisation ; et
e) la présentation d'un sous-jeu du jeu de résultat si ledit utilisateur dispose d'une autorisation de mauvaise utilisation faible par comparaison avec ledit score M dérivé.

9. Procédé selon soit la revendication 7, soit la revendication 8, dans lequel, au niveau de l'étape (a), une autorisation de mauvaise utilisation est attribuée conformément à un comportement normal pendant une phase d'apprentissage.

10. Procédé selon soit la revendication 7, soit la revendication 8, comprenant l'activation d'un système d'alerte si ledit utilisateur dispose d'une autorisation de mauvaise utilisation faible par comparaison avec ledit score M dérivé.

11. Procédé selon la revendication 1, dans lequel la procédure récursive de construction d'un ensemble de publications comprend les étapes qui suivent : 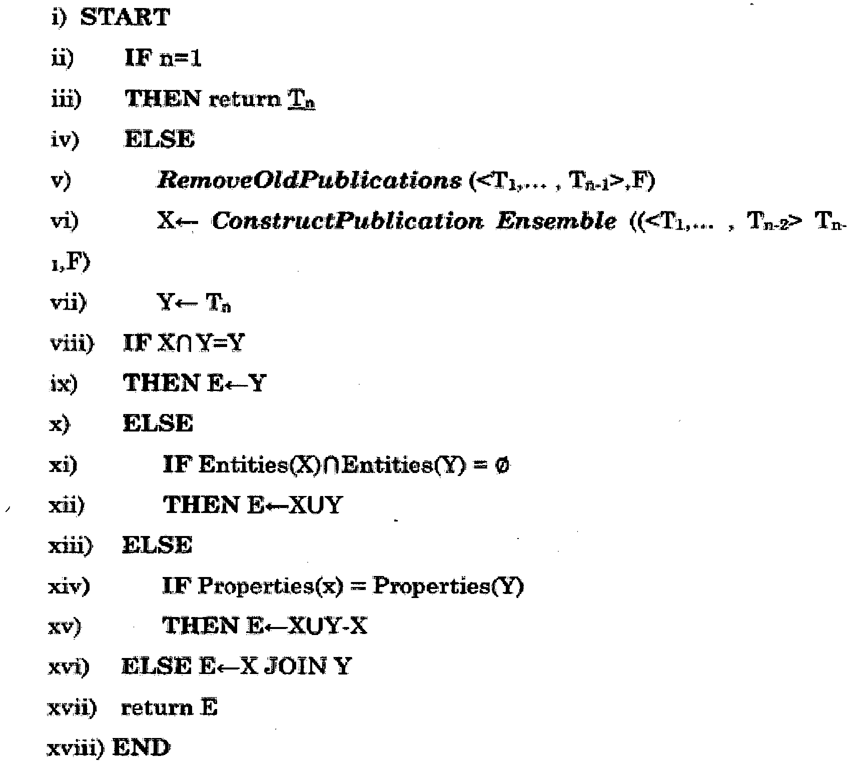 où X et Y sont deux publications séquentielles ; <T₁, ..., Tₙ₋₁> sont les publications antérieures ; Tₙ est la (nouvelle) publication courante ; F est la trame temporelle dans laquelle une publication antérieure doit toujours être considérée ; Entities(X) sont toutes les valeurs des attributs d'identifiants dans la publication X ; Properties(X) sont tous les attributs sensibles de la publication (X) ; Entities(Y) sont toutes les valeurs des attributs d'identifiants dans la publication Y ; et Properties(Y) sont tous les attributs sensibles de la publication (Y).
